# EUROPEAN PATENT APPLICATION

(11) **EP 4 836 115 A1**
(43) Date of publication of application: **04.11.2026**
(21) Application number: 26175554.0
(22) Date of filing: 29.04.2026
(51) Int. Cl.: H01M 50/186, H01M 50/15, H01M 50/55, H01M 50/147, H01M 50/176, H01M 50/184, H01M 50/188, H01M 50/342, H01M 50/375, H01M 50/553

(54) **TOP COVER ASSEMBLY, BATTERY, AND ELECTRICITY-CONSUMPTION DEVICE**

(30) Priority: 29.04.2025 CN 202510553434
(71) Applicant: Xiamen Hithium Energy Storage Technology Co., Ltd., Xiamen, Fujian 361100 (CN)
(72) Inventor: XIAO, Hepan, Xiamen, 361100 (CN); XU, Weidong, Xiamen, 361100 (CN); FU, Yunfeng, Xiamen, 361100 (CN); JIN, Dongming, Xiamen, 361100 (CN)
(74) Representative: Mewburn Ellis LLP

(57) **Abstract**

The present disclosure provides a top cover assembly (100), a battery (200) and an electricity-consumption device (300). The top cover assembly (100) includes a terminal post (70), a top cover (30), an upper plastic member (20), a pressing ring (10) and a limiting body (40); the terminal post (70) is connected to the top cover (30); the upper plastic member (20) is sleeved on the terminal post (70) and is located between the top cover (30) and the terminal post (70); the upper plastic member (20) includes an upper plastic body (21) and a positioning hole (212) passing through the upper plastic body (21); the pressing ring (10) is sleeved on the terminal post (70); the limiting body (40) is inserted through the positioning hole (212). A portion of the outer surface of the limiting body is interference-fitted to a portion of the inner surface of the positioning hole (212).

## Description

### TECHNICAL FIELD

This disclosure relates to the field of energy storage technology, and in particular, to a top cover assembly, a battery, and an electricity-consumption device.

### BACKGROUND

With the development of clean energy and the enhancement of people's environmental awareness, batteries have the characteristic of being recyclable, that is, the active substances of the batteries can be activated through charging after discharge and continue to be used, are becoming increasingly widespread. In the battery, the top cover assembly includes a pressing ring, upper plastic member, a limiting body and a top cover, etc. Therein, the limiting body is embedded in the upper plastic member and plays a supporting role between the pressing ring and the top cover.

However, in the existing technology, the limiting body generally is small and there may be a large number of limit bodies in the top cover assembly. Therefore, during the assembly process of the top cover assembly, the phenomenon of missing installation of one or more limiting bodies frequently occurs, requiring rework and affecting assembly efficiency. Moreover, if the upper plastic member rotates during the assembly process, causing incorrect installation or cracking of one or more limiting bodies, rework is also required, which greatly affects the assembly efficiency of the top cover assembly. Thus, the existing assembly method between the limiting body and the upper plastic member results in low assembly efficiency of the top cover assembly.

### SUMMARY

The embodiments of the present disclosure provide a top cover assembly, a battery and an electricity-consumption device, which can improve the assembly efficiency of the top cover assembly and thereby enhance the overall assembly efficiency of the battery.

In a first aspect, the present disclosure provides a top cover assembly, top cover assembly includes a terminal post, a top cover, an upper plastic member, a pressing ring and a limiting body;
the terminal post is connected to the top cover;
the upper plastic member is sleeved on the terminal post, along a radial direction of the terminal post, the upper plastic member is located between the top cover and the terminal post; the upper plastic member includes an upper plastic body and positioning hole, the positioning hole is provided on the upper plastic body and pass through the upper plastic body along a thickness direction of the upper plastic member;
the pressing ring is sleeved on the terminal post and is in contact with a side of the upper plastic body that faces away from the top cover; and
the limiting body is inserted through the positioning hole and is located between the pressing ring and the top cover in a thickness direction of the top cover; in a circumferential direction of the limiting body, a portion of the outer surface of the limiting body is interference-fitted to a portion of the inner surface of the positioning hole.

It is understandable that in the technical solution of the present disclosure, by making the outer surface of the limiting body interference connect with the inner surface of the positioning hole, the connection between the limiting body and the upper plastic member can be made more stable, thereby greatly reducing the possibility of limiting body assembly misalignment caused by the rotation of the upper plastic, effectively preventing the risk of missing installing the limiting body, and improving the assembly efficiency of the top cover assembly. While avoiding rework, it can also enhance the safety of battery cell usage. In addition, due to the outer surface of the limiting body is only in an interference connection with the portion of the inner surface of the positioning hole, there will be a certain gap between the limiting body and the inner surface of the positioning hole, except for the interference connection region between the limiting body and the inner surface of the positioning hole. This means that during the assembly process of the limiting body with the upper plastic member, if the interference fit degree is too large due to manufacturing tolerances, assembly tolerances and other errors, the force exerted by the limiting body compressing the upper plastic member can be dispersed from the interference connection region between the outer surface of the limiting body and the inner surface of the positioning hole to the gap between the limiting body and the inner surface of the positioning hole. It is conducive to avoiding the occurrence of stress concentration at the interference fit connection position between the outer surface of the limiting body and the inner surface of the positioning hole, and thus avoiding lead to cracking of the upper plastic member, and the stability and reliability of the connection between the limiting body and the upper plastic member are increased.

In one possible embodiment, the positioning hole comprises a first side surface and a second side surface, along the circumferential direction of the positioning hole, the two ends of the first side surface are respectively connected to the two ends of the second side surface, and the first side surface is extended in a curved manner between the two ends of the second side surface, the outer surface of the limiting body is interference-fitted to a portion of the first side surface and a portion of the second side surface.

In one possible embodiment, a shape of the positioning hole is elliptical or irregularly circular.

In one possible embodiment, the positioning hole includes at least three first side surfaces. Along the circumferential direction of the positioning hole, each of the first side surfaces is connected end to end to form the positioning hole. Along the circumferential direction of the positioning hole, a portion of the outer surface of the limiting body is interference-fitted with the at least three first side surfaces.

In one possible embodiment, the positioning hole includes two first side surfaces and two second side surfaces. Along the circumferential direction of the positioning hole, each first side surface is connected between two adjacent second side surfaces, and the outer surface of the limiting body is interference-fitted with the two first side surfaces and/or the two second side surfaces.

In one possible embodiment, the positioning hole includes at least three first side surfaces and at least three second side surfaces. Along the circumferential direction of the positioning hole, each first side surface is connected between two adjacent second side surfaces, and the outer surface of the limiting body is interference-fitted with the at least three first side surfaces and/or the at least three second side surfaces;
a maximum distance between the first side surface and a central axis of the limiting body is different from a maximum distance between the second side surface and the central axis of the limiting body.

In one possible embodiment, the upper plastic body is provided with a first installation groove, an opening of the first installation groove is disposed on the surface of the upper plastic member facing away from the top cover, the positioning hole passes through a bottom wall of the first installation groove and a surface of the upper plastic body facing the top cover, and a part of the pressing ring is disposed in the first installation groove.

In one possible embodiment, the positioning holes includes a first hole and at least one second hole sequentially arranged along the thickness direction of the upper plastic member, the first hole comprises the first side surface and the second side surface, and the second hole and the first hole are coaxially arranged and are communicated with each other;
an opening of the second hole away from the first hole is disposed on the bottom wall of the first installation groove, and a maximum size of the second hole in the length direction of the upper plastic member gradually decreases from the upper plastic member towards the top cover; and/or
the opening of the second hole away from the first hole is disposed on the surface of the upper plastic member facing the top cover, the maximum size of the second hole in the length direction of the upper plastic member gradually increases from the upper plastic member towards the top cover.

In one possible embodiment, the maximum size of the limiting body in the length direction of the top cover assembly gradually decreases along a direction from the pressing ring to the upper plastic member.

In one possible embodiment, a melting point of the limiting body is greater than a melting point of the upper plastic member.

In one possible embodiment, the pressing ring is provided with a first groove, and an opening of the first groove is disposed on the surface of the pressing ring facing the upper plastic member;
the top cover is provided with a second groove, and an opening of the second groove is disposed on a surface of the top cover facing the upper plastic member;
one end of the limiting body is disposed in the first groove, and the other end of the limiting body is disposed in the second groove.

In one possible embodiment, the pressing ring is provided with a first through hole, the first through hole passes through the pressing ring along a thickness direction of the pressing ring, a part of the terminal post is disposed in the first through hole, the pressing ring is further provided with a first notch, the first notch passes through the outer side wall of the pressing ring in the radial direction and communicates with the first groove and the outside of the pressing ring;
the top cover is provided with a second through hole, the second through hole passes through the top cover along the thickness direction of the top cover, a part of the terminal post is disposed inside the second through hole; the top cover is provided with a second notch, the second notch passes through an inner wall of the second through hole and communicates with the second groove and the second through hole.

In one possible embodiment, a shortest distance between the bottom wall of the first groove and the bottom wall of the second groove is greater than a height of the limiting body.

In one possible embodiment, a gap region between the outer surface of the limiting body and the inner wall of the second groove forms a first gas passage, a gap region between the outer surface of the limiting body and an inner surface of the positioning hole forms a second gas passage, and a gap region between the outer surface of the limiting body and an inner wall of the first groove forms a third gas passage., a gap region between the outer surface of the pressing ring and the inner wall of the first installation groove forms a fourth gas passage. The first gas passage, the second gas passage, the third gas passage and the fourth gas passage are successively connected and form at least partially of an air detection channel of the top cover assembly.

In one possible embodiment, the top cover is further provided with a second installation groove, an opening of the second installation groove is disposed on the surface of the top cover facing the upper plastic member, the second installation groove is coaxially arranged with the second through hole and communicated with the second through hole, a part of the upper plastic body is disposed in the second installation groove, and the opening of the second groove is disposed on the bottom wall of the second installation groove;
the upper plastic member further includes a first protrusion, the first protrusion is fixedly connected to the surface of the upper plastic body away from the pressing ring, and the first protrusion is disposed in the second through hole;
the upper plastic member is provided with a third through hole, the third through hole passes through the upper plastic body and the first protrusion along the thickness direction of the upper plastic member, the third through hole is coaxially arranged and communicated with the first installation groove, and is connected between the first through hole and the second through hole, and is in communication with the first through hole and the second through hole;
the terminal post includes a terminal post base and a terminal post main body, the terminal post base is disposed on a side of the top cover that is away from the pressing ring, one end of the terminal post main body is fixedly connected to the terminal post base, the terminal post main body passes through the first through hole, the second through hole and the third through hole, the other end of the terminal post main body extends out of the pressing ring.

In one possible embodiment, the top cover assembly further includes a sealing ring, the sealing ring is arranged on the terminal post main body, the sealing ring is connected between the top cover and the terminal post base, and the sealing ring is further connected between the first protrusion and the terminal post base.

In one possible embodiment, the top cover assembly further comprises a lower plastic member, the lower plastic member is connected to the surface of the top cover away from the pressing ring, and a part of the lower plastic member is located between the top cover and the terminal post base.

In a second aspect, the present disclosure further provides a battery, the battery includes a housing, a battery cell and the top cover assembly as described above. The top cover assembly is connected to the housing, and the top cover assembly and the housing enclose to form an accommodation space of the battery, and the battery cell is located within the accommodation space.

In a third aspect, the present disclosure further provides an electricity-consumption device, the electricity-consumption device includes the battery as described above.

### BRIEF DESCRIPTION OF THE ACCOMPANYING DRAWINGS

Fig. 1 is a structural schematic diagram of an energy storage system provided in embodiments of the present disclosure;
Fig. 2 is a schematic diagram of the structure of a battery provided in embodiments of the present disclosure;
Fig. 3 is a structural schematic diagram of the top cover assembly provided in the first embodiment of the present disclosure;
Fig. 4 is a schematic diagram of the disassembled structure of the top cover assembly shown in Fig. 3.
Fig. 5a is a structural schematic diagram of the pressing ring of the top cover assembly shown in FIG. 3 from one angle.
Fig.5b is a structural schematic diagram of the pressing ring of the top cover assembly shown in FIG. 3 from another angle.
FIG. 6a is a structural schematic diagram of the upper plastic of the top cover assembly shown in FIG. 3 from one angle.
FIG. 6b is a structural schematic diagram of the upper plastic shown in FIG. 6a from another angle;
Fig. 7 is a sectional schematic diagram obtained by cutting along the cutting line A-A as shown in Fig. 6a;
Fig. 8a is a first structural schematic diagram of a partial structure of the upper plastic member of the top cover assembly as shown in Fig. 3;
Fig.8b is a second structural schematic diagram of a partial structure of the upper plastic member of the top cover assembly shown in Fig. 3;
Fig. 8c is a third structural schematic diagram of a partial structure of the upper plastic member of the top cover assembly shown in Fig. 3;
Fig.8d is a fourth structural schematic diagram of a partial structure of the upper plastic member of the top cover assembly shown in Fig. 3;
Fig. 8e is a fifth structural schematic diagram of a partial structure of the upper plastic member of the top cover assembly shown in Fig. 3;
Fig. 8f is a structural schematic diagram of the assembly of the upper plastic member and the limiting body as shown in Fig. 6b;
Fig. 9 is a sectional schematic diagram obtained by cutting along the cutting line B-B as shown in Fig. 3;
Fig. 10 is a structural schematic diagram of the limiting body of the top cover assembly as shown in Fig. 3;
Fig. 11 is a structural schematic diagram of the top cover of the top cover assembly as shown in Fig. 3;
FIG. 12a is a structural schematic diagram of the lower plastic of the top cover assembly shown in FIG. 3 from one angle;
FIG. 12b is a partial structural schematic diagram of the lower plastic of the top cover assembly shown in FIG. 3 from another angle;
Fig. 13 is a schematic diagram of the structure of the terminal posts of the top cover assembly shown in Fig. 3;
FIG. 14 is a schematic diagram of the limiting body and the upper plastic member of the top cover assembly according to the second embodiment of the present disclosure after being assembled together;
Fig. 15 is a sectional schematic diagram obtained by cutting along the cutting line C-C shown in Fig. 14.
Fig. 16 is a structural schematic diagram of the top cover assembly provided in the third embodiment of the present disclosure;
Fig. 17 is a cross-sectional schematic diagram of a partial structure of the top cover assembly obtained by cutting along the cutting line D-D shown in Fig. 16.
Fig. 18 is a structural schematic diagram of the pressing ring of the top cover assembly as shown in Fig. 16.
Fig. 19 is a schematic diagram of a path for gas diffusion within the top cover assembly.

Description of reference signs of the accompanying drawings:
Energy storage system 400, power conversion device 410, first user load 420, second user load 430, electricity-consumption device 300, battery 200, housing 210, battery cell 220, top cover assembly 100, pressing ring 10, upper plastic member 20, top cover 30, limiting body 40, explosion-proof valve assembly F, explosion-proof valve 50, explosion-proof valve protection plate 60, terminal post 70, lower plastic member 80, sealing ring 90, first through hole 11, first groove 12, upper plastic body 21, first protrusion 22, third through hole 23, first installation groove 211, positioning hole 212, first surface 201, second surface 202, first notch 121, first inclined surface 2111, second inclined surface 221, first hole 2121, second hole 2122, first side surface 2121a, second side surface 2121b, third side surface 2121c, second installation groove 31, second through hole 32, second groove 33, explosion-proof hole 34, electrolyte injection hole 35, identification 36, second notch 331, first end 41, second end 42, terminal post main body 71, terminal post base 72, first sub-portion 711, second sub-portion 712, third sub-portion 713, lower plastic body 81, second protrusion 82, fourth through hole 811, fifth through hole 821, third inclined surface 822, gas detection channel S, first gas passage S1, second gas passage S2, third gas passage S3, fourth gas passage S4, gap T1, gap T2, gap T3, gap T4, gap T5, gap T6, gap T7, gap T8, maximum distance L1 between the first side surface 2121a and the center axis line of the positioning hole 212, maximum distance L2 between the second side surface 2121b and the center axis line of the positioning hole 212, maximum distance L3 between the first side surface 2121a and the center axis line of the limiting body 40, maximum distance L4 between the second side surface 2121b and the center axis line of the limiting body 40, shortest distance D between the bottom wall of the first groove 12 and the bottom wall of the second groove 33, height H of the limiting body 40.

### DETAILED DESCRIPTION OF ILLUSTRATED EMBODIMENTS

For ease of understanding, the terms involved in the embodiments of the present disclosure are first explained as follows.

The term "and/or": it is merely to describe the association relationship of associated objects, which indicates there can be three types of relationships. For example, A and/or B can represent: the existence of A alone, the coexistence of A and B, and the existence of B alone.

The term "multiple": refers to two or more than two.

The term "connection" or "connect": it should be understood in a broad sense, for instance, when A is connected to B, it can be either A is directly connected to B or A is indirect connected to B through an intermediate medium.

The following will describe technical solutions of embodiments of the present disclosure clearly and completely with reference to the accompanying drawings in embodiments of the present disclosure.

The embodiments of the present disclosure provide a top cover assembly, a battery and an electricity-consumption device.

Since energy required by people has strong temporal and spatial characteristics, in order to use energy in a reasonable manner and improve energy utilization, a medium or a device is required to store energy in the same energy form or in another energy form converted and then to release energy in a specific energy form based on requirements of future applications. As is known to all, at present, generation of green electric energy is generally dependent on photovoltaics, wind power, water potential, and the like. However, in general, wind energy, solar energy, and the like are strongly intermittent and volatile, resulting in an unstable power grid, insufficient power supply at a power consumption peak, and overmuch power supply at a power consumption valley. In addition, an unstable voltage may further damage electric power. Therefore, "curtailment of wind and photovoltaics" may occur due to insufficient power demand or insufficient power-grid admitting ability, and energy storage is required to solve these problems. That is, electric energy is stored by converting it into other forms of energy by physical or chemical means, and energy is released by converting it into electric energy when needed. In brief, energy storage is similar to a large "power bank", which stores electric energy when photovoltaics and wind energy are sufficient and releases stored electric power when needed.

Taking electrochemical energy storage as an example, an electricity-consumption device 300 is provided in the present disclosure. The electricity-consumption device 300 includes an energy storage apparatus, the energy storage apparatus may include one group of chemical batteries. Chemical elements in the chemical batteries can be used as an energy storage medium to implement a charging/discharging process through chemical reaction or change of the energy storage medium. In brief, electric energy generated by solar energy and wind energy is stored in the chemical batteries. When the usage of external electric energy reaches a peak, the power stored in the chemical batteries is released for use, or is transferred to a place where the power is scarce for reuse.

At present, energy storage may be applied in various application scenarios, including power-generation-side energy storage, grid-side energy storage, base-station-side energy storage, user-side energy storage, etc. Corresponding types of energy storage apparatuses of the electricity-consumption device 300 include the following:
(1) A large-sized energy storage container applied in a grid-side energy-storage scenario. The energy storage container may serve as a high-quality active and reactive regulation power source in the grid, which can realize matching of electric energy loads in time and space, enhance the capacity for integration of renewable energy, and is of great significance in the backup of the grid system, relieving the pressure of power supply at a peak load, and peak shaving and frequency modulation.
(2) Small and medium-sized energy storage cabinets are used in industrial and commercial energy storage scenarios (banks, shopping malls, etc.) on the user side and small household energy storage boxes used in household energy storage scenarios on the user side. The main operating mode is "peak shaving and valley filling". There is a large price difference in electricity bills at peak and valley according to electricity demand. After users have the energy storage device of the electricity-consumption device 300, in order to reduce costs, they usually charge the energy storage cabinets/boxes during the low electricity price period. During the peak electricity price period, the electricity in the energy storage device of the electricity-consumption device 300 is discharged for use to achieve the purpose of saving electricity bills. In addition, in remote regions, as well as regions prone to natural disasters such as earthquakes and hurricanes, the presence of household energy storage device of the electricity-consumption device 300 is equivalent to users providing backup power for themselves and the power grid, eliminating the inconvenience caused by frequent power outages due to disasters or other reasons.

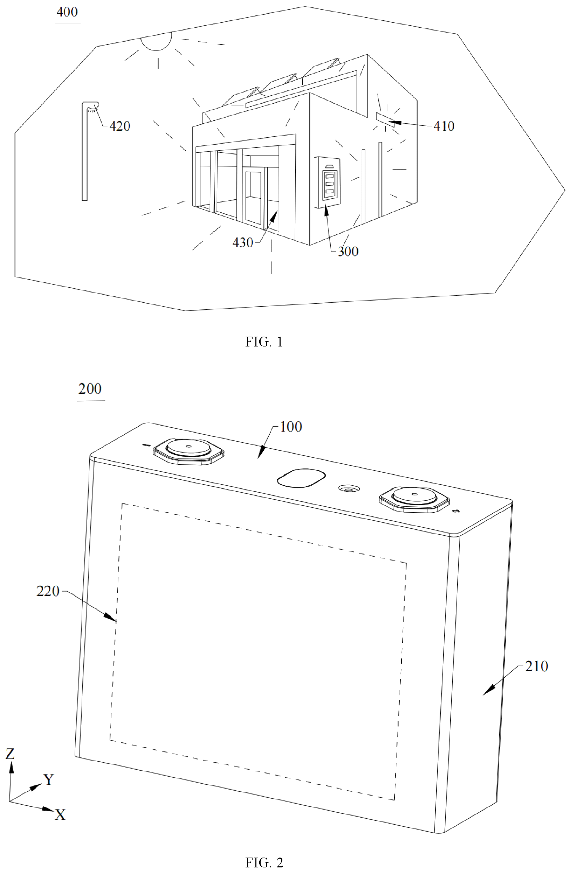

Please refer to Fig. 1, which is a structural schematic diagram of the energy storage system 400 provided by the embodiment of the present disclosure. The embodiments of present disclosure take the household energy storage scenario in user-side energy storage as an example for illustration. The electricity-consumption device 300 of present disclosure is not limited to the household energy storage scenario.

The embodiments of the present disclosure provide an energy storage system 400, the energy storage system 400 includes a power conversion device 410, a first user-side load 420, a second user-side load 430 and an electricity-consumption device 300. The electricity-consumption device 300 can include a small energy storage box that can be wall-mounted on an outdoor wall. In detail, the electricity-consumption device 300 can connect to photovoltaic panels, the photovoltaic panels can convert solar energy into electricity during periods of low electricity prices. The electricity-consumption device 300 can store this electricity and supply it to street lamps and household appliances during peak electricity prices, or provide power when the power grid is cut off.

Therein, the electricity-consumption device 300 can include the energy storage apparatus, the energy storage apparatus can include but is not limited to a battery cell, a battery module, a battery pack, a battery systems, etc. When the electricity-consumption device 300 includes multiple batteries 200, the multiple batteries 200 are electrically connected and all batteries 200 are located inside the housing of the electricity-consumption device 300, and the multiple batteries 200 can be protected by the housing from interference from the external environment. For example, the multiple batteries 200 are arranged at intervals. Therein, the multiple batteries 200 can be connected in series, in parallel, or in a combination of series and parallel connections to achieve larger capacity and power. The embodiments of the present disclosure take the electricity-consumption device 300 includes the battery 200 as an example for illustration, but it should be understood that the electricity-consumption device 300 can includes other types of energy storage apparatus, not limited to the battery 200.

Please refer to Fig. 2, which is a structural schematic diagram of the battery 200 provided by an embodiment of the present disclosure.

In order to facilitate to describe, a length direction of the battery 200 is defined as the X direction, a width direction of the battery 200 is defined as the Y direction, and a height direction of the battery 200 is defined as the Z direction in the following text. Therein, the X direction, Y direction and Z direction are mutually perpendicular in pairs.

The battery 200 may include a top cover assembly 100, a housing 210 and an battery cell 220. The top cover assembly 100 is connected to the housing 210, and the top cover assembly 100 and the housing 210 enclose to form an accommodation space, that is, the top cover assembly 100 and the housing 210 cooperate with each other to form the accommodation space. The battery cell 220 is located within the accommodation space. For example, the top cover assembly 100 can be welded to the housing 210 by a welding process. The housing 210 can be made of metal materials, such as aluminum alloy, etc. The battery 200 can be cylindrical battery 200 or square battery 200, etc.

It should be noted that the purpose of Fig. 2 is only to provide a schematic description of the connection relationship among the top cover assembly 100, the housing 210 and the battery cell 220, and does not specify the connection positions, specific structures or quantities of each component. The structure indicated by the embodiments of the present disclosure does not constitute a specific limitation on the battery 200. In some other embodiments of the present disclosure, the battery 200 may include more or fewer components than that shown in Fig. 2, or some components of Fig. 2 can be combined or disassembled, or the battery 200 may include may include different components than that shown in Fig. 2 or the components can be arranged different from that shown in Fig. 2. The component shown in Fig. 2 can be implemented in hardware, software, or a combination of software and hardware.

It is understandable that in the related technology, the top cover assembly includes a pressing ring, an upper plastic member, a limiting body and a top cover, etc. Therein, the limiting body is generally installed in the upper plastic member and is used to position and connect the corresponding positions between the pressing ring and the top cover, thus preventing installation errors. However, the limiting body is generally is small and the quantity of the limiting body is large, so during the assembly of the top cover assembly, it is very likely that one or more limit bodies will be missed and rework will occur, which affects the assembly efficiency. Moreover, if the upper plastic member rotates during the assembly process, causing errors in the assembly of one ore more limit bodies or fractures of one or more limit bodies, rework is also required, which greatly affects the assembly efficiency of the top cover assembly.

In conclusion, currently, the assembly method between the limiting body and the upper plastic member easily leads to a low assembly efficiency of the top cover assembly.

Therefore, the embodiments of present disclosure provide a top cover assembly 100, which can improve the assembly efficiency of the top cover assembly 100 and thereby improve the overall assembly efficiency of the battery 200. The following will provide detailed explanations of the structure of the top cover assembly 100 through three detail embodiments.

### First embodiment:

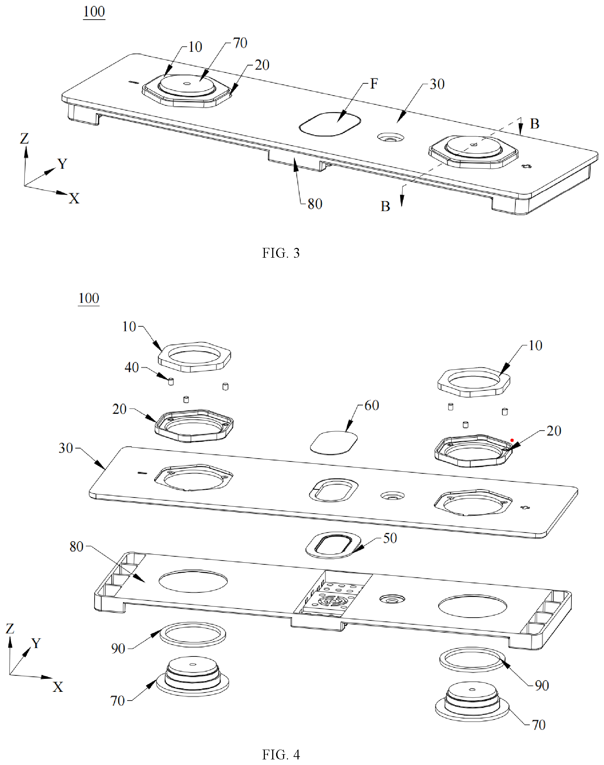

Please refer to Figs. 3 and 4. Fig. 3 is a structural schematic diagram of the top cover assembly provided in the first embodiment of the present disclosure, Fig. 4 is a schematic diagram of the disassembled structure of the top cover assembly as shown in Fig. 3.

The top cover assembly 100 can include a pressing ring 10, an upper plastic member 20, a top cover 30, a limiting body 40, an explosion-proof valve assembly F, a terminal post 70, a lower plastic member 80 and a sealing ring 90. The upper plastic member 20 is connected to the top cover 30. The pressing ring 10 is connected to a side of the upper plastic member 20 opposite to the top cover 30. The limiting body 40 is sleeved on the upper plastic member 20 and is located between the pressing ring 10 and the top cover 30, namely each limiting body 40 is located between one corresponding pressing ring 10 and the top cover 30. The explosion-proof valve assembly F is connected to the top cover 30 and is used for pressure relief protection of the battery 200. The lower plastic member 80 is connected to a surface of the top cover 30 opposite to the upper plastic member 20. The terminal post 70 is threaded through the lower plastic member 80, the top cover 30, the upper plastic member 20 and the pressing ring 10. The terminal post 70 can be used as the electrode lead-out of the battery 200 to achieve electrical connection between the battery 200 and external devices. The sealing ring 90 is sleeved around the terminal post 70 and is located between the top cover 30 and the terminal post 70. The sealing ring 90 is also located between the upper plastic member 20 and the terminal post 70.

Therein, the explosion-proof valve assembly F can include an explosion-proof valve 50 and an explosion-proof valve protection plate 60. The explosion-proof valve 50 and the explosion-proof valve protection plate 60 are both connected to an explosion-proof hole 34 and are arranged in sequence in a thickness direction of the top cover 30 (the Z direction as shown in the corresponding drawing(s)). The explosion-proof valve protection plate 60 covers the explosion-proof valve 50. The number of the upper plastic member 20 can be two, and the two upper plastic members 20 are installed at the two sides of a length direction (the X direction as shown in the corresponding drawing(s)) of the top cover 30. The number of the pressing ring 10 can be two, and the two pressing rings 10 are respectively installed on the two upper plastics 20. The number of the terminal post 70 can be two, and the two terminal posts 70 can be an negative terminal post and a positive terminal post. The terminal posts 70 can be spaced apart in the length direction of the top cover 30. Each terminal post 70 is threaded through the lower plastic 80, the top cover 30, one upper plastic member 20 and one pressing ring 10. The number of the sealing ring 90 can be two, and the two sealing rings 90 are respectively sleeved around the two terminal posts 70.

The following text will use one upper plastic member 20, one pressing ring 10, one terminal post 70 and one sealing ring 90 to assemble the top cover 30 and the lower plastic member 80 as an example to explain the structure of the top cover component 100. In cases where there is no conflict, the descriptions of the structure of the one upper plastic member 20, the one pressing ring 10, the one terminal post 70 and the one sealing ring 90 provided in the following text can be applied to other upper plastics 20, pressing rings 10, terminal posts 70 and sealing rings 90.

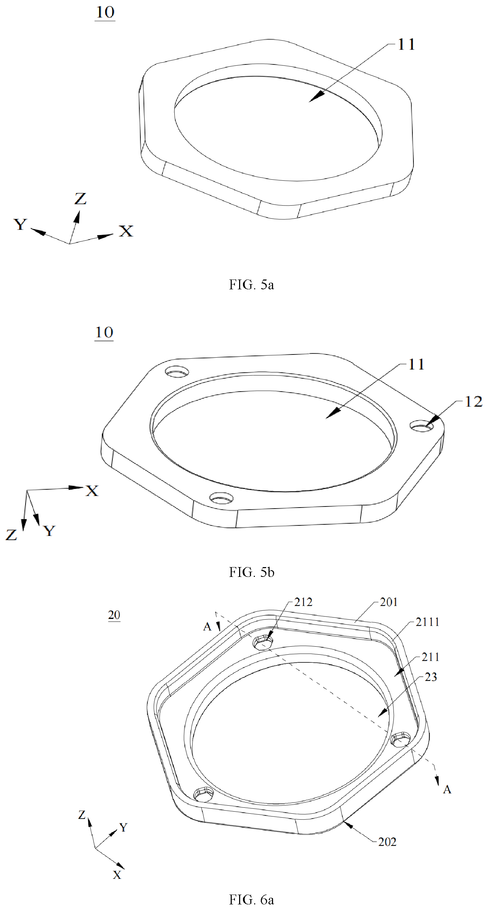

Please refer to FIG. 5a and FIG. 5b. FIG. 5a is a structural schematic diagram of the pressing ring 10 of the top cover assembly 100 shown in FIG. 3 from one angle, and FIG. 5b is a structural schematic diagram of the pressing ring 10 of the top cover assembly 100 shown in FIG. 3 from another angle.

The pressing ring 10 is connected to the upper plastic member 20. Specifically, the pressing ring 10 may be installed in the first installation groove 211 of the upper plastic member 20 and abut against the bottom wall of the first installation groove 211. A part of the pressing ring 10 is located within the first installation groove 211 of the upper plastic member 20, and a part of the pressing ring 10 protrudes relative to the upper plastic member 20. The pressing ring 10 may be provided with a first through hole 11 and a first groove 12. The first through hole 11 penetrates through the pressing ring 10 in a thickness direction of the pressing ring 10 (the Z direction shown in the corresponding drawings). The first through hole 11 may be used for the terminal post 70 to pass through, and used for accommodating a second sub-portion 712 of the terminal post 70. The opening of the first groove 12 is located on the surface of the pressing ring 10 close to the upper plastic member 20. A recessed direction of the first groove 12 may be a direction from the pressing ring 10 toward the upper plastic member 20. The first groove 12 may be used for accommodating a portion of the limiting body 40, so as to further restrict the limiting body 40 from moving in the X direction, Y direction, and Z direction. The number of the first groove 12 may be one or more. When the number of the first groove 12 is multiple, the plurality of first grooves 12 may be spaced apart along the circumferential direction of the pressing ring 10. The circumferential direction of the pressing ring 10 is a direction around the central axis of the pressing ring 10 for one full revolution. Each first groove 12 is used for accommodating one limiting body 40. In some other embodiments, the first groove 12 may also not be provided on the pressing ring 10, which is not strictly limited.

As an example, the number of the first groove 12 may be three, and the three first grooves 12 may be spaced apart along the circumferential direction of the pressing ring 10. The three first grooves 12 may be respectively located at three trisection points of the pressing ring 10 and arranged in a triangular pattern on the pressing ring 10.

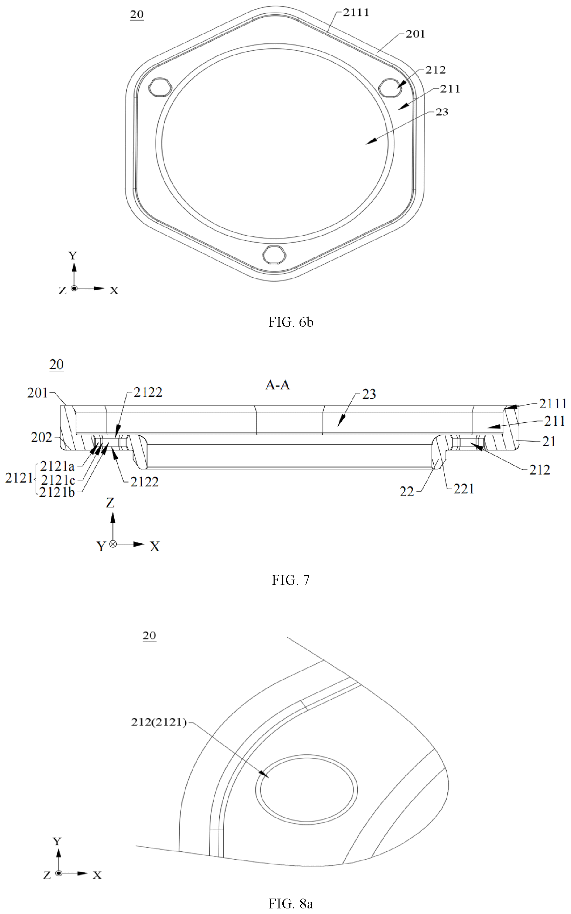

Please refer to FIG. 6a, FIG. 6b and FIG. 7. FIG. 6a is a structural schematic diagram of the upper plastic member 20 of the top cover assembly 100 shown in FIG. 3 from one angle, FIG. 6b is a structural schematic diagram of the upper plastic member 20 shown in FIG. 6a from another angle, and FIG. 7 is a cross-sectional schematic diagram obtained by cutting along the cutting line A-A shown in FIG. 6a.

The upper plastic member 20 is connected to the top cover 30. Specifically, the upper plastic member 20 may be installed in the second installation groove 31 of the top cover 30. A portion of the upper plastic member 20 is located within the second installation groove 31 of the top cover 30, and a portion of the upper plastic member 20 protrudes relative to the top cover 30. The upper plastic member 20 may include a first surface 201 and a second surface 202. The first surface 201 is a surface of the upper plastic member 20 faces the pressing ring 10, and the second surface 202 is the surface of the upper plastic member 20 faces the top cover 30. The first surface 201 and the second surface 202 are oppositely located in the thickness direction of the upper plastic member 20 (the Z direction shown in the corresponding drawings). The upper plastic member 20 may be provided with a first installation groove 211, a positioning hole 212, and a third through hole 23.

The opening of the first installation groove 211 may be located on the first surface 201. The first installation groove 211 may be formed by recessing from the first surface 201 toward the second surface 202. The first installation groove 211 may be used for installing the pressing ring 10. There may be a gap between the inner circumferential surface of the first installation groove 211 and the outer circumferential surface of the pressing ring 10. The inner circumferential surface of the first installation groove 211 is a surface surrounding the central axis of the first installation groove 211 for one full revolution. The outer circumferential surface of the pressing ring 10 is a surface surrounding the central axis of the pressing ring 10 for one full revolution.

It can be understood that, by providing a gap between the inner circumferential surface of the first installation groove 211 and the outer circumferential surface of the pressing ring 10, the pressing ring 10 can be installed in the first installation groove 211 of the upper plastic member 20 more conveniently and quickly, thereby improving the installation efficiency of the top cover assembly 100. In addition, it can also provide a certain gas passage for the gas in the battery 200, thereby facilitating the discharge of the gas in the battery 200.

The first installation groove 211 may include a first inclined surface 2111. The first inclined surface 2111 is connected to the opening of the first installation groove 211. The first inclined surface 2111 is circumferentially located along the first installation groove 211. The circumferential direction of the first installation groove 211 is a direction around the central axis of the first installation groove 211 for one full revolution. The sectional width of the first inclined surface 2111 in the thickness direction of the upper plastic member 20 (that is, as shown in FIG. 7, a sectional width along the XY plane) gradually decreases from the opening of the first installation groove 211 toward the bottom wall of the first installation groove 211. The first inclined surface 2111 can serve a guiding function, helping to guide the pressing ring 10 into and install it in the first installation groove 211, thereby reducing the installation difficulty and improving the installation efficiency.

The positioning hole 212 may penetrate through the upper plastic member 20 in the thickness direction of the upper plastic member 20. One end opening of the positioning hole 212 may be located on the bottom wall of the first installation groove 211, and the other end opening of the positioning hole 212 may be located on the second surface 202. That is, the positioning hole 212 may penetrate through the bottom wall of the first installation groove 211 and the second surface 202 in the thickness direction of the upper plastic member 20. The bottom wall of the first installation groove 211 is oppositely disposed to the opening of the first installation groove 211. The positioning hole 212 may communicate with the first installation groove 211. The positioning hole 212 may be used for installing the limiting body 40. The number of the positioning hole 212 may be one or more. When the number of the positioning hole 212 is multiple, the plurality of positioning holes 212 may be spaced apart along the circumferential direction of the upper plastic member 20. The circumferential direction of the upper plastic member 20 is a direction around the central axis of the upper plastic member 20 for one full revolution. Exemplarily, the number of the positioning hole 212 may be three. The three positioning holes 212 are respectively located at the three trisection points in the circumferential direction of the upper plastic member 20. The three positioning holes 212 may be arranged in a triangular pattern on the upper plastic member 20.

The following description will use the structure of one positioning hole 212 as an example to explain the positioning hole 212 in detail. Where there is no conflict, the description of one positioning hole 212 below may be applied to other positioning holes 212.

In one possible embodiment, please refer to FIG. 8a. FIG. 8a is a first structural schematic diagram of a partial structure of the upper plastic member 20 of the top cover assembly 100 shown in FIG. 3. The positioning hole 212 may be elliptical or irregularly circular. That is, the positioning hole 212 may be a non-circular hole and the shape of the positioning hole 212 may be elliptical or irregularly circular.

Therein, the irregular circle refers to a shape deviating from a standard circle, which is irregular in shape, has incomplete symmetry, and includes sharp corners, inflection points, or discontinuities.

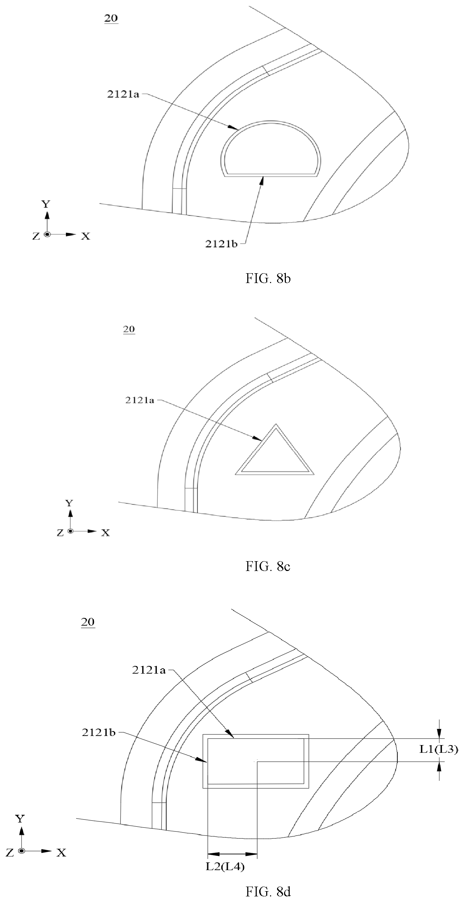

In another possible embodiment, please refer to FIG. 8b. FIG. 8b is a second structural schematic diagram of a partial structure of the upper plastic member 20 of the top cover assembly 100 shown in FIG. 3.

The positioning hole 212 may have one first side surface 2121a and one second side surface 2121b. Along the circumferential direction of the positioning hole 212, both ends of the first side surface 2121a are respectively connected to both ends of the second side surface 2121b. The first side surface 2121a may extend in a bent manner between both ends of the second side surface 2121b. That is, the positioning hole 212 may be a non-circular hole.

In yet another possible embodiment, please refer to FIG. 8c. FIG. 8c is a third structural schematic diagram of a partial structure of the upper plastic member 20 of the top cover assembly 100 shown in FIG. 3.

The positioning hole 212 may have at least three first side surfaces 2121a. Along the circumferential direction of the positioning hole 212, the at least three first side surfaces 2121a are connected end to end to form the positioning hole 212, namely each first side surface is connected end to end with two adjacent first side surfaces 2121 to form the positioning hole 212. Therein, the positioning hole 212 may be a non-circular hole.

As an example, the positioning hole 212 may be a triangular hole. For example, the shape of the positioning hole 212 may be an equilateral triangle, an isosceles triangle, a right triangle, or a triangle with three unequal sides.

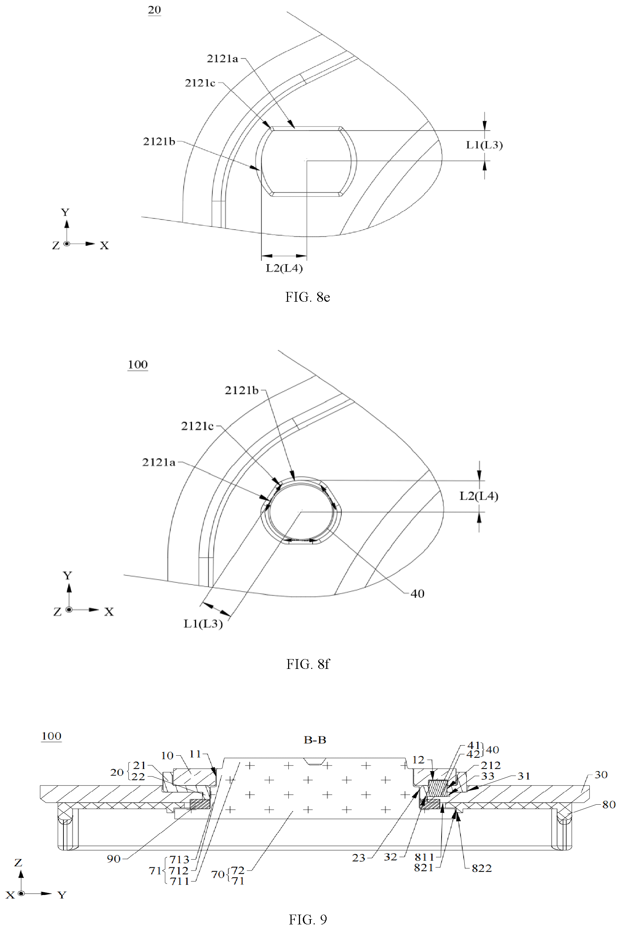

In still another possible embodiment, as shown in FIG. 8d and FIG. 8e, FIG. 8d is a fourth structural schematic diagram of a partial structure of the upper plastic member 20 of the top cover assembly 100 shown in FIG. 3, and FIG. 8e is a fifth structural schematic diagram of a partial structure of the upper plastic member 20 of the top cover assembly 100 shown in FIG. 3.

The positioning hole 212 may have at least two first side surfaces 2121a and at least two second side surfaces 2121b. Along the circumferential direction of the positioning hole 212, each first side surface 2121a is connected between two adjacent second side surfaces 2121b. A maximum distance L1 between the first side surface 2121a and the central axis of the positioning hole 212 is different from a maximum distance L2 between the second side surface 2121b and the central axis of the positioning hole 212. Alternatively, the maximum distance L1 between the first side surface 2121a and the central axis of the positioning hole 212 may also be the same as the maximum distance L2 between the second side surface 2121b and the central axis of the positioning hole 212. No limitation is imposed in this regard.

In this embodiment, the positioning hole 212 may be a non-circular hole.

As an example, as shown in FIG. 8d, the positioning hole 212 may be a rectangular hole. Alternatively, as shown in FIG. 8e, the positioning hole 212 may be an oblong hole.

Further, as shown in FIG. 8f, FIG. 8f is a structural schematic diagram of an assembly of the upper plastic member 20 and the limiting body 40 shown in FIG. 6b. The positioning hole 212 may have at least three first side surfaces 2121a and at least three second side surfaces 2121b. Along the circumferential direction of the positioning hole 212, each first side surface 2121a is connected between two adjacent second side surfaces 2121b. The maximum distance L1 between the first side surface 2121a and the central axis of the positioning hole 212 is different from the maximum distance L2 between the second side surface 2121b and the central axis of the positioning hole 212. Alternatively, the maximum distance L1 between the first side surface 2121a and the central axis of the positioning hole 212 may also be the same as the maximum distance L2 between the second side surface 2121b and the central axis of the positioning hole 212. No limitation is imposed in this regard.

In this embodiment, the positioning hole 212 may be a non-circular hole.

As an example as shown in FIG. 8f, the positioning hole 212 may be a hexagonal hole.

It should be noted that in this embodiment, the non-circular holes described herein and below all refer to non-circular holes having symmetry (such as geometric symmetry, rotational symmetry, etc.). The central axis of the positioning hole 212 refers to a straight line passing through the geometric center of the positioning hole 212 and coinciding with the symmetry axis of the positioning hole 212. Of course, in some other embodiments, the non-circular hole may also be an irregularly shaped non-circular hole, which is not strictly limited.

In one possible application scenario, please refer to FIG. 7 and FIG. 8f in combination. The maximum distance L1 between the first side surface 2121a and the central axis of the positioning hole 212 is smaller than the maximum distance L2 between the second side surface 2121b and the central axis of the positioning hole 212. That is, a maximum distance L3 between the first side surface 2121a and the central axis of the limiting body 40 is smaller than a maximum distance L4 between the second side surface 2121b and the central axis of the limiting body 40. Specifically, the diameter of the inscribed circle formed by the first side surface 2121a is smaller than the maximum dimension of the limiting body 40 in the length direction (X direction shown in the corresponding drawing(s)) of the top cover assembly 100. And/or, the diameter of the inscribed circle formed by the first side surface 2121a is smaller than the maximum dimension of the limiting body 40 in the width direction (Y direction shown in the corresponding drawing(s)) of the top cover assembly 100. The first side surface 2121a contacts the outer surface of the limiting body 40. The diameter of the inscribed circle formed by the second side surface 2121b is larger than the maximum dimension of the limiting body 40 in the length direction of the top cover assembly 100. And/or, the diameter of the inscribed circle formed by the second side surface 2121b is larger than the maximum dimension of the limiting body 40 in the width direction of the top cover assembly 100. As an example, as shown in FIG. 8f, the first side surface 2121a may be a planar surface. The second side surface 2121b may be a curved surface. The limiting body 40 may be cylindrical. The positioning hole 212 may include three first side surfaces 2121a and three second side surfaces 2121b. The diameter of the inscribed circle formed by the three first side surfaces 2121a is smaller than the diameter of the limiting body 40, and the diameter of the inscribed circle formed by the three second side surfaces 2121b is larger than the diameter of the limiting body 40.

In this application scenario, the positioning hole 212 may further include a third side surface 2121c. One first side surface 2121a and an adjacent second side surface 2121b may be transitionally connected through one third side surface 2121c, thereby preventing the connection between the first side surface 2121a and the second side surface 2121b from being too sharp and scratching the limiting body 40. As an example, the third side surface 2121c may be a curved surface.

It can be understood that by making the diameter of the inscribed circle formed by the first side surface 2121a smaller than the maximum dimension of the limiting body 40 in the length and/or width direction of the top cover assembly 100, at least three first side surfaces 2121a of the positioning hole 212 can be interference-fitted with the limiting body 40, causing the limiting body 40 and the upper plastic member 20 to be in close contact and relatively fixed, preventing the limiting body 40 from falling off or tilting during the assembly process of the top cover assembly 100. In addition, by making the diameter of the inscribed circle formed by the second side surface 2121b larger than the maximum dimension of the limiting body 40 in the length and/or width direction of the top cover assembly 100, a gap can be formed between each second side surface 2121b and the limiting body 40. Furthermore, since each first side surface 2121a is partially interference-fitted with the limiting body 40, a certain gap also exists between each first side surface 2121a and the limiting body 40. This allows that during the assembly process of the upper plastic member 20 and the limiting body 40, when the interference amount becomes too large due to manufacturing tolerances, assembly tolerances, or other errors, the force exerted on the upper plastic member 20 by the limiting body 40 can be dispersed from the interference connection region between the limiting body 40 and the first side surface 2121a to the gap between the limiting body 40 and the first side surface 2121a, and further to the gap between the limiting body 40 and the second side surface 2121b, thereby avoiding stress concentration that could cause cracking of the upper plastic member 20. The force exerted on the upper plastic member 20 by the limiting body 40 can be dispersed in the directions indicated by the three double-headed arrows in FIG. 8f. In summary, by partially interference-connecting the inner surface of the positioning hole 212 with the limiting body 40, it is possible to ensure interference fit between the limiting body 40 and the upper plastic member 20, tightly fixing the limiting body 40 and the upper plastic member 20, and also avoid the risk of cracking of the upper plastic member 20.

In this embodiment, the positioning hole 212 may include a first hole 2121 and a second hole 2122 sequentially arranged in the thickness direction of the upper plastic member 20. The first hole 2121 and the second hole 2122 are coaxially arranged and communicate with each other. The first hole 2121 has the first side surface 2121a and the second side surface 2121b described above. One opening of the second hole 2122 communicates with the first hole 2121, and the other opening of the second hole 2122 is away from the first hole 2121.

The opening of the second hole 2122 away from the first hole 2121 may be located on the bottom wall of the first installation groove 211. The maximum dimension of the second hole 2122 in the length direction (X direction shown in the figure) of the upper plastic member 20 gradually decreases from the upper plastic member 20 toward the top cover 30. Alternatively, the opening of the second hole 2122 away from the first hole 2121 may be located on the second surface 202. The maximum dimension of the second hole 2122 in the length direction of the upper plastic member 20 gradually increases from the upper plastic member 20 toward the top cover 30.

It should be noted that the change in the maximum dimension of the second hole 2122 in the length direction of the upper plastic member 20 described above also applies to the change in the maximum dimension of the second hole 2122 in the width direction (Y direction shown in the figure) of the upper plastic member 20.

In summary, the maximum dimension of the second hole 2122 in the length direction and/or width direction of the upper plastic member 20 gradually increases from the first hole 2121 toward the direction away from the first hole 2121. A gap may exist between the inner surface of the second hole 2122 and the outer surface of the limiting body 40.

It can be understood that since the maximum dimension of the second hole 2122 in the length direction and/or width direction of the upper plastic member 20 gradually increases from the first hole 2121 toward the direction away from the first hole 2121, even if the limiting body 40 is initially tilted or misaligned with respect to the positioning hole 212, under the guiding effect of the second hole 2122, the limiting body 40 can still be conveniently and quickly guided to insert into the positioning hole 212, so that the limiting body 40 is fixedly connected with the upper plastic member 20. In addition, since the limiting body 40 only contacts some inner surfaces of the first hole 2121 of the positioning hole 212, and is spaced apart from the inner surface of the second hole 2122 of the positioning hole 212, it is possible to reduce the interference contact region between the limiting body 40 and the positioning hole 212 while ensuring the connection strength between the limiting body 40 and the positioning hole 212, reduce the assembly difficulty of the top cover assembly 100, and thereby improve the assembly efficiency of the top cover assembly 100.

In this embodiment, the shape of the second hole 2122 may be the same as the shape of the first hole 2121. Specifically, the cross-sectional shape of the second hole 2122 along the thickness direction of the upper plastic body 21 is the same as the cross-sectional shape of the first hole 2121 along the thickness direction of the upper plastic body 21. That is, as shown in FIG. 6b, the cross-sectional shape of the second hole 2122 along the XY plane is the same as the cross-sectional shape of the first hole 2121 along the XY plane. In other embodiments, the shape of the second hole 2122 may also be different from the shape of the first hole 2121.

The number of the second hole 2122 may be one or two. Therein, when the number of the second hole 2122 is one, that is, when the positioning hole 212 includes only one second hole 2122, the opening of the second hole 2122 away from the first hole 2121 is located on the bottom wall of the first installation groove 211 or on the second surface 202. When the number of the second holes 2122 is two, that is, when the positioning hole 212 includes two second holes 2122, the opening of one second hole 2122 away from the first hole 2121 is located on the bottom wall of the first installation groove 211, and the opening of the other second hole 2122 away from the first hole 2121 is located on the second surface 202. The first hole 2121 is connected between the two second holes 2122 and communicates with the two second holes 2122.

In this embodiment, as as shown in FIG. 6a and other related drawings, the upper plastic member 20 may be provided with a third through hole 23. The third through hole 23 penetrates through the upper plastic member 20 in the thickness direction of the upper plastic member 20. The third through hole 23 may be coaxially arranged with the first installation groove 211. In the thickness direction of the upper plastic member 20, the third through hole 23 may communicate with the first installation groove 211. When the upper plastic member 20 is connected to the pressing ring 10, the third through hole 23 of the upper plastic member 20 may be coaxially arranged with and communicate with the first through hole 11 of the pressing ring 10.

The third through hole 23 may be used for allowing the terminal post 70 to pass through, and for accommodating the third sub-portion 713 of the terminal post 70. Therein, the positioning hole 212 may be located at the outer edge of the third through hole 23. When the number of the positioning hole 212 is multiple, the multiple positioning holes 212 may be spaced apart along the circumferential direction of the third through hole 23 and located at the outer edge of the third through hole 23. The circumferential direction of the third through hole 23 may be the direction around the central axis of the third through hole 23 for one full revolution.

Please refer to FIG. 6a, FIG. 6b, and FIG. 7 in combination. Part of the upper plastic member 20 is located between the top cover 30 and the terminal post 70 to separate the top cover 30 and the terminal post 70, preventing direct contact and short circuit between the top cover 30 and the terminal post 70. Specifically, the upper plastic member 20 may include an upper plastic body 21 and a first protrusion 22 connected to each other.

The upper plastic body 21 may be installed in the second installation groove 31 of the top cover 30. The upper plastic body 21 may include the first surface 201 and the second surface 202 described above, and may be provided with the first installation groove 211 and the positioning hole 212 described above.

The first protrusion 22 may be annular and fixedly connected to the second surface 202 of the upper plastic body 21. The first protrusion 22 may also be installed in the second through hole 32 of the top cover 30, and located between the inner surface of the second through hole 32 of the top cover 30 and the outer surface of the third sub-portion 713 of the terminal post 70. The outer peripheral surface of the first protrusion 22 may abut against the inner surface of the second through hole 32. The first protrusion 22 is used to isolate the terminal post 70 and the top cover 30, preventing direct contact between the terminal post 70 and the top cover 30, which could create a hazard. The first protrusion 22 and the upper plastic body 21 may cooperate to form the third through hole 23 described above. The third through hole 23 may penetrate through the first protrusion 22 and the upper plastic body 21 in the thickness direction of the upper plastic. Therein, the first protrusion 22 and the upper plastic body 21 may be an integrated structure formed by connection through integral molding or other methods.

The end of the first protrusion 22 away from the upper plastic body 21 is provided with a second inclined surface 221. The second inclined surface 221 may be circumferentially arranged around the first protrusion 22. Therein, the circumferential direction of the first protrusion 22 is the direction around the central axis of the first protrusion 22 for one full revolution. The sectional width of the second inclined surface 221 in the thickness direction of the upper plastic member 20 gradually decreases from the end where the first protrusion 22 is connected to the upper plastic body 21 toward the end of the first protrusion 22 away from the upper plastic body 21. The second inclined surface 221 can serve a guiding function, facilitating the installation of the first protrusion 22 into the second through hole 32 of the top cover 30, reducing the installation difficulty between the upper plastic member 20 and the top cover 30, and improving the installation efficiency of the upper plastic member 20 and the top cover 30.

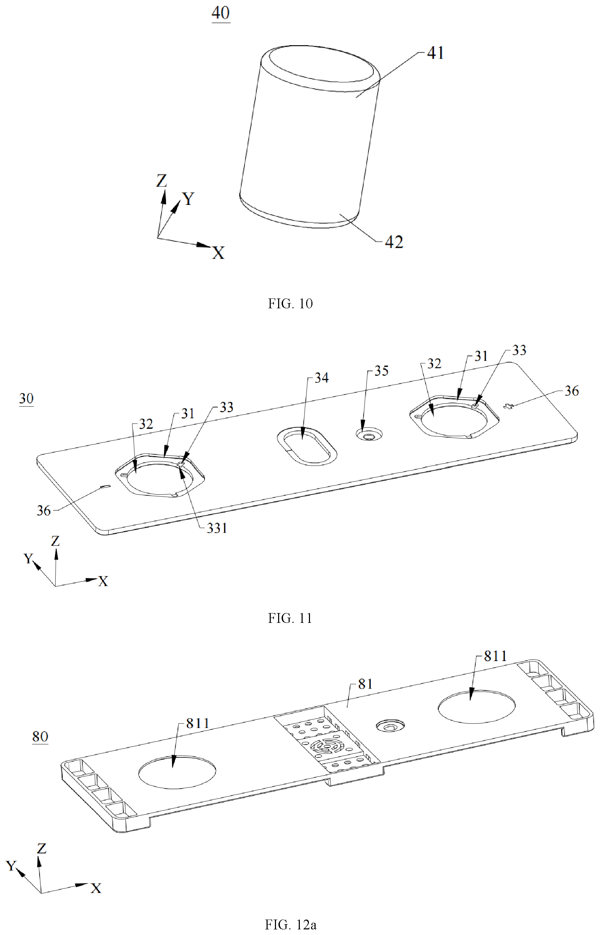

Please refer to FIG. 9 and FIG. 10 in combination. FIG. 9 is a cross-sectional schematic diagram obtained by cutting along the cutting line B-B shown in FIG. 3. FIG. 10 is a structural schematic diagram of the limiting body 40 of the top cover assembly 100 shown in FIG. 3.

The limiting body 40 is inserted through the positioning hole 212 of the upper plastic member 20 and located between the pressing ring 10 and the top cover 30. The limiting body 40 may include a first end 41 and a second end 42. Therein, the first end 41 faces toward the pressing ring 10. The second end 42 faces toward the top cover 30. The first end 41 protrudes from the bottom wall of the first installation groove 211 of the upper plastic member 20. The second end 42 protrudes from the second surface 202 of the upper plastic member 20. The first end 41 of the limiting body 40 is located in the first groove 12 of the pressing ring 10 and abuts against or is spaced apart from the pressing ring 10. The second end 42 of the limiting body 40 is located in the second groove 33 of the top cover 30 and abuts against or is spaced apart from the top cover 30. The sectional width of the limiting body 40 in the thickness direction (Z direction shown in the corresponding drawing(s)) of the top cover assembly 100 may be the same from the first end 41 toward the second end 42.

It can be understood that by having the first end 41 of the limiting body 40 located in the first groove 12 of the pressing ring 10, and the second end 42 of the limiting body 40 located in the second groove 33 of the top cover 30, the pressing ring 10 and the top cover 30 can cooperate to respectively restrict movement of the limiting body 40 from opposite sides thereof, further improving the installation stability and reliability of the limiting body 40.

In some other embodiments, the first groove 12 may also not be provided in the pressing ring 10, and the second groove 33 may also not be provided in the top cover 30. In this case, the first end 41 of the limiting body 40 abuts against or is spaced apart from the surface of the pressing ring 10 near the upper plastic member 20. The second end 42 of the limiting body 40 abuts against or is spaced apart from the bottom wall of the second installation groove 31 of the top cover 30.

In this embodiment, a dimension of the melting point of the limiting body 40 may be greater than a dimension of the melting point of the upper plastic member 20.

It can be understood that during use of the battery 200, thermal runaway may occur due to mechanical damage, excessively high ambient temperature, improper operation, or other reasons, causing the upper plastic member 20 to completely melt and lose its supporting and insulating functions at high temperatures, leading to sinking of the pressing ring 10 and the terminal post 70, and resulting in electrolyte leakage and short circuit in the battery 200. In this embodiment, by making the dimension of the melting point of the limiting body 40 greater than the dimension of the melting point of the upper plastic member 20, even if the battery cell 220 undergoes thermal runaway causing the upper plastic member 20 to be melted by high temperatures, the limiting body 40 can still effectively support the pressing ring 10, preventing reducing compression of the sealing ring 90 and then leading to excessive electrolyte leakage from the battery cell 220, caused by excessive sinking of the terminal post 70, thereby improving the operational reliability of the battery 200.

Please refer to FIGs. 8a, 8f and 9. A portion of the outer surface of the limiting body 40 is interference-fitted with at least a portion of the inner surface of the positioning hole 212. Specifically, the outer surface of the limiting body 40 is spaced apart from the second hole 2122 of the positioning hole 212. That is, a gap exists between the outer surface of the limiting body 40 and the second hole 2122 of the positioning hole 212. A portion of the outer surface of the limiting body 40 is interference-fitted with a portion of the inner surface of the first hole 2121 of the positioning hole 212. Specifically, as shown in FIG. 8a, when the positioning hole 212 includes only one side surface (i.e., the positioning hole 212 has an elliptical or irregular circular shape), a portion of the outer surface of the limiting body 40 is interference-fitted with a portion of this one side surface of the positioning hole 212. Alternatively, as shown in FIG. 8f, when the positioning hole 212 has at least two side surfaces, a portion of the outer surface of the limiting body 40 is interference-fitted with some of the at least two side surfaces of the positioning hole 212.

The interference-fitted connection between the limiting body 40 and the positioning hole 212 will be described in detail below through several embodiments.

In one possible embodiment, as shown in FIGs. 8d and 8e, the positioning hole 212 may have two first side surfaces 2121a and two second side surfaces 2121b. The outer surface of the limiting body 40 is interference-fitted with the two first side surfaces 2121a and has a gap with the two second side surfaces 2121b, namely, the inner surface of the positioning hole 212a may include the two first side surfaces 2121a and two second side surfaces 2121b, and the the outer surface of the limiting body 40 is only interference-fitted with the two first side surfaces 2121a, thereby achieving a portion of the outer surface of the limiting body 40 is interference-fitted with at least a portion of the inner surface of the positioning hole 212. The maximum distance L3 between the first side surface 2121a and the central axis of the limiting body 40 is less than the maximum distance L4 between the second side surface 2121b and the central axis of the limiting body 40.

In another possible embodiment, as shown in FIG. 8f, the positioning hole 212 may have three first side surfaces 2121a and three second side surfaces 2121b. The outer surface of the limiting body 40 is interference-fitted with the three first side surfaces 2121a and has a gap with the three second side surfaces 2121b, namely, the inner surface of the positioning hole 212a may include the three first side surfaces 2121a and three second side surfaces 2121b, and the the outer surface of the limiting body 40 is only interference-fitted with the three first side surfaces 2121a, thereby achieving a portion of the outer surface of the limiting body 40 is interference-fitted with at least a portion of the inner surface of the positioning hole 212. The maximum distance L3 between the first side surface 2121a and the central axis of the limiting body 40 is less than the maximum distance L4 between the second side surface 2121b and the central axis of the limiting body 40.

Alternatively, the outer surface of the limiting body 40 may also be interference-fitted with all first side surfaces 2121a and all second side surfaces 2121b. That is, the outer surface of the limiting body 40 is interference-fitted with all side surfaces of the positioning hole 212. It should be noted that, in this case, the outer surface of the limiting body 40 partially contacts each side surface of the positioning hole 212. That is, except for the interference-fitted connection region between the limiting body 40 and each side surface of the positioning hole 212, a certain gap exists between the limiting body 40 and the remaining portion of each side surface of the positioning hole 212, thereby also achieving a portion of the outer surface of the limiting body 40 is interference-fitted with at least a portion of the inner surface of the positioning hole 212.

Illustratively, as shown in FIG. 8b, the positioning hole 212 may have one first side surface 2121a and one second side surface 2121b. The outer surface of the limiting body 40 is interference-fitted with a portion of the first side surface 2121a and a portion of the second side surface 2121b, namely, the inner surface of the positioning hole 212a may include one first side surface 2121a and one second side surface 2121b, and the outer surface of the limiting body 40 is interference-fitted with a portion of the first side surface 2121a and a portion of the second side surface 2121b, thereby achieving a portion of the outer surface of the limiting body 40 is interference-fitted with at least a portion of the inner surface of the positioning hole 212. The maximum distance L3 between the first side surface 2121a and the central axis of the limiting body 40 is equal to the maximum distance L4 between the second side surface 2121b and the central axis of the limiting body 40.

Illustratively, as shown in FIG. 8c, the positioning hole 212 may have three first side surfaces 2121a. The outer surface of the limiting body 40 is interference-fitted with a portion of each first side surface 2121a, namely, the inner surface of the positioning hole 212a may include three first side surfaces 2121a, and the outer surface of the limiting body 40 is interference-fitted with a portion of each first side surface 2121a, thereby achieving a portion of the outer surface of the limiting body 40 is interference-fitted with at least a portion of the inner surface of the positioning hole 212. The distance between each first side surface 2121a and the central axis of the limiting body 40 is equal.

It can be understood that the limiting body in the top cover assembly is generally installed in the upper plastic member and serves a supporting function between the pressing ring and the top cover. However, in the prior art, the limiting body is generally small and there are may be a large number of limit bodies in the top cover assembly. Therefore, during the assembly process of the top cover assembly, the phenomenon of missing installation of one or more limiting bodies frequently occurs, requiring rework and affecting assembly efficiency. Moreover, if the upper plastic member rotates during the assembly process, causing incorrect installation of one or more limiting bodies, rework is also required, which greatly affects the assembly efficiency of the top cover assembly. Thus, the existing assembly method between the limiting body and the upper plastic member results in low assembly efficiency of the top cover assembly.

Therefore, in this embodiment, by interference-fitting the outer surface of the limiting body 40 with the inner surface of the positioning hole 212, the connection between the limiting body 40 and the upper plastic member 20 can be made more secure, greatly reducing the possibility of misalignment of the limiting body 40 caused by rotation of the upper plastic member 20, effectively preventing the risk of missing installation of the limiting body 40, and improving the assembly efficiency of the top cover assembly 100. While avoiding rework, the safety in use of the battery cell 220 can also be improved. In addition, since the outer surface of the limiting body 40 is only interference-fitted with a portion of the inner surface of the positioning hole 212, a certain gap exists between the limiting body 40 and the remaining portion of the inner surface of the positioning hole 212, other than the interference-fitted connection between the limiting body 40 and the inner surface of the positioning hole 212. This enables that when the interference amount becomes too large due to manufacturing tolerances, assembly tolerances, and other errors during the assembly process of the limiting body 40 with the upper plastic member 20, the force exerted by the limiting body 40 compressing the upper plastic member 20 can be dispersed from the interference-fitted connection region between the outer surface of the limiting body 40 and the inner surface of the positioning hole 212 into the gap between the limiting body 40 and the inner surface of the positioning hole 212. This is conducive to avoiding stress concentration at the interference-fitted connection between the outer surface of the limiting body 40 and the inner surface of the positioning hole 212, thereby preventing cracking of the upper plastic member 20, and increasing the connection stability and reliability between the limiting body 40 and the upper plastic member 20.

Furthermore, the positioning hole 212 may be a special-shaped hole. This design enables efficient identification of the positioning hole 212 and accurate installation of the limiting body 40 into the positioning hole 212 during the assembly process of the limiting body 40, thereby further improving the assembly efficiency of the top cover assembly 100.

Please refer to FIGs. 9 and 11. FIG. 11 is a schematic structural diagram of the top cover 30 of the top cover assembly 100 shown in FIG. 3.

The top cover 30 may extend along the X direction and be provided with a second installation groove 31 and a second through hole 32. The opening of the second installation groove 31 is located on the surface of the top cover 30 facing the upper plastic member 20. The second installation groove 31 may be formed by recessing inward from the surface of the top cover 30 facing the upper plastic member 20 toward the interior of the top cover 30. The second installation groove 31 may be used for installing the upper plastic body 21 of the upper plastic member 20. The second through hole 32 may penetrate through the top cover 30 along the thickness direction thereof. The second through hole 32 is coaxially arranged with and connected to the second installation groove 31. When the assembly of the top cover assembly 100 is completed, the second through hole 32 may also communicate with the third through hole 23 of the upper plastic member 20, such that the third through hole 23 of the upper plastic member 20 is connected between the first through hole 11 of the pressing ring 10 and the second through hole 32 of the top cover 30, and communicates the first through hole 11 of the pressing ring 10 with the second through hole 32 of the top cover 30. The second through hole 32 is used for the terminal post 70 to pass through, and for accommodating the third sub-portion 713 of the terminal post 70. The inner surface of the second through hole 32 may be spaced apart from the outer peripheral surface of the third sub-portion 713 of the terminal post 70. The outer peripheral surface of the third sub-portion 713 is the surface surrounding the central axis of the third sub-portion 713 for one full revolution. The gap region between the inner surface of the second through hole 32 and the outer peripheral surface of the third sub-portion 713 of the terminal post 70 may be used for accommodating the first protrusion 22 of the upper plastic member 20.

The number of second installation grooves 31 may be two, and the two second installation grooves 31 are spaced apart from each other along the length direction (X direction as shown in the figure) of the top cover 30. Each second installation groove 31 may be used for installing one upper plastic member 20. The number of second through holes 32 may be two, and the two second through holes 32 are spaced apart from each other along the length direction of the top cover 30, and are respectively coaxially arranged with and connected to the two second installation grooves 31. Each second through hole 32 is used for one terminal post 70 to pass through, and for accommodating the third sub-portion 713 of one terminal post 70.

The top cover 30 may also be provided with an explosion-proof hole 34 and an electrolyte injection hole 35. The explosion-proof hole 34 is located between the two second installation grooves 31, and is spaced apart from both second installation grooves 31. The explosion-proof hole 34 may penetrate through the top cover 30 along the thickness direction of the top cover 30, and is used for connecting with the explosion-proof valve assembly F. The electrolyte injection hole 35 penetrates through the top cover 30 along the thickness direction of the top cover 30. The electrolyte injection hole 35 may be arranged between the explosion-proof hole 34 and the second installation groove 31, and is spaced apart from both the explosion-proof hole 34 and the second installation groove 31. The top cover 30 may also be provided with a mark 36. The mark 36 is arranged adjacent to the second through hole 32. The mark 36 is used for marking the positive or negative polarity of the terminal post 70 installed in the second through hole 32 of the top cover 30, so as to facilitate more efficient alignment of the second through hole 32 with the terminal post 70 of positive polarity or negative polarity, and assist in installing the terminal post 70 of corresponding polarity into the corresponding second through hole 32.

Illustratively, the number of the marks 36 may be two, and the two marks 36 are respectively adjacent to and spaced apart from the two second through holes 32. A "+" shaped mark 36 is arranged around the second through hole 32 connected to the terminal post 70 of positive polarity. A "-" shaped mark 36 is arranged around the second through hole 32 connected to the terminal post 70 of negative polarity.

Please refer to FIGs. 5b, 9 and 11. The top cover 30 may also be provided with a second groove 33. The opening of the second groove 33 is located on the bottom wall of the second installation groove 31, and is connected to the second installation groove 31. The bottom wall of the second installation groove 31 is arranged opposite to the opening of the second installation groove 31. The second groove 33 may be formed by recessing from the bottom wall of the second installation groove 31 in a direction away from the opening of the second installation groove 31. The second groove 33 is used for accommodating a portion of the limiting body 40, to further serve the function of restricting movement of the limiting body 40 along the X direction, Y direction and Z direction.

In one possible embodiment, the top cover 30 may be provided with a second notch 331. The second notch 331 may face toward the second through hole 32. Specifically, the second notch 331 may penetrate through the inner wall of the second through hole 32. The second notch 331 connects the second groove 33 and the second through hole 32. That is, the second groove 33 may be an open groove open at one side. The second notch 331 is an open end of the second groove 33. Illustratively, the second groove 33 may be an arched groove open at one side. The open end of the second groove 33 faces toward the second through hole 32. That is, the second notch 331 faces toward the second through hole 32.

It can be understood that if the second groove 33 is configured as a closed groove with closed side walls, during the processing of the battery 200, the side wall of the second groove 33 close to the second through hole 32 may deform or produce burrs due to being too thin, thereby generating extra metal debris that falls into the interior of the battery 200 and causing short circuit of the battery 200. Therefore, by configuring the side wall of the second groove 33 close to the second through hole 32 as open, the problem of internal short circuit of the battery 200 caused by metal debris generated due to the side wall at the edge region of the second groove 33 being too thin can be avoided.

In some other embodiments, the top cover 30 may also be not provided with the second notch 331, which is not strictly limited.

In this embodiment, the number of the second grooves 33 may be the same as the number of the limiting body 40, and thus may also be one or more. When the number of second grooves 33 is multiple, the multiple second grooves 33 may be spaced apart from each other along the circumferential direction of the second installation groove 31, and all be located at the outer edge of the second through hole 32. The circumferential direction of the second installation groove 31 is the direction surrounding the central axis of the second installation groove 31 for one full revolution. Each second groove 33 is used for accommodating one limiting body 40.

In some other embodiments, the top cover 30 may also be not provided with the second groove 33, which is not strictly limited.

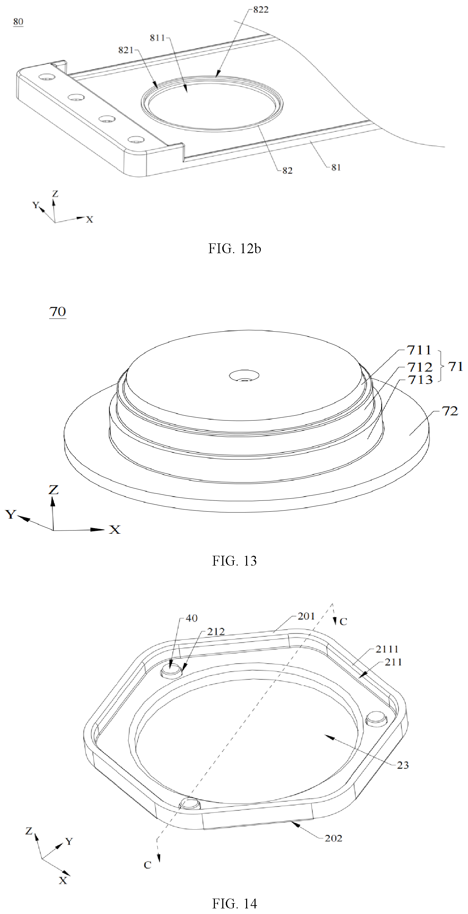

Please refer to FIGs. 9, 12a and 12b. FIG. 12a is a schematic structural diagram of the lower plastic member 80 of the top cover assembly 100 shown in FIG. 3 from one angle, and FIG. 12b is a partial schematic structural diagram of the lower plastic member 80 of the top cover assembly 100 shown in FIG. 3 from another angle.

The lower plastic member 80 is connected to the surface of the top cover 30 facing away from the pressing ring 10. A portion of the lower plastic member 80 is located between the top cover 30 and a terminal post base 72 of the terminal post 70. The lower plastic member 80 may be provided with a fourth through hole 811. The fourth through hole 811 may penetrate through the lower plastic member 80 along the thickness direction of the lower plastic member 80 (Z direction as shown in the corresponding drawing(s)). The fourth through hole 811 may be used for the terminal post 70 to pass through, and used for accommodating the third sub-portion 713 of the terminal post 70. The inner surface of the fourth through hole 811 may be spaced apart from the outer peripheral surface of the third sub-portion 713 of the terminal post 70. The gap region between the inner surface of the fourth through hole 811 and the outer peripheral surface of the third sub-portion 713 of the terminal post 70 may be used for accommodating the sealing ring 90. The number of fourth through holes 811 may be two, and the two fourth through holes 811 are spaced apart from each other along the length direction (X direction as shown in the corresponding drawing(s)) of the lower plastic member 80. Each fourth through hole 811 is used for one terminal post 70 to pass through, and for accommodating the third sub-portion 713 of one terminal post 70.

In this embodiment, the lower plastic member 80 may include a lower plastic body 81 and a second protrusion 82. The lower plastic body 81 may extend along the X direction, and be provided with the aforementioned fourth through hole 811. The fourth through hole 811 may penetrate through the lower plastic body 81 along the thickness direction of the lower plastic body 81 (Z direction as shown in the corresponding drawing(s)). The surface of the lower plastic body 81 facing away from the top cover 30 may abut against the terminal post base 72 of the terminal post 70.

The second protrusion 82 is fixedly connected to the surface of the lower plastic body 81 facing away from the top cover 30. The second protrusion 82 may be arranged surrounding the outer edge of the fourth through hole 811, and be coaxially arranged with the fourth through hole 811. The number of second protrusions 82 may be two, and the two second protrusions 82 are spaced apart from each other along the length direction of the lower plastic member 80. Each second protrusion 82 is arranged surrounding the outer edge of one fourth through hole 811, and is coaxially arranged with one fourth through hole 811.

The second protrusion 82 may be provided with a fifth through hole 821. The fifth through hole 821 penetrates through the second protrusion 82 along the thickness direction of the second protrusion 82. The fifth through hole 821 is coaxially arranged with and connected to the fourth through hole 811. The cross-sectional width of the fifth through hole 821 along the thickness direction of the lower plastic member 80 is greater than the cross-sectional width of the fourth through hole 811 along the thickness direction of the lower plastic member 80. The fifth through hole 821 may be used for the terminal post 70 to pass through, and for accommodating a portion of the terminal post base 72 of the terminal post 70. The inner surface of the fifth through hole 821 may abut against a portion of the outer peripheral surface of the terminal post base 72. The depth of the fifth through hole 821 may be less than the thickness of the terminal post base 72. Therefore, in the direction from the top cover 30 toward the lower plastic member 80, the terminal post base 72 extends out of the fifth through hole 821, that is, the terminal post base 72 protrudes relative to the second protrusion 82.

A third inclined surface 822 is arranged at an end of the second protrusion 82 away from the lower plastic body 81. The third inclined surface 822 may be arranged along the circumferential direction of the fifth through hole 821. The cross-sectional width of the third inclined surface 822 along the thickness direction of the lower plastic member 80 may gradually increase in the direction from the lower plastic body 81 toward the second protrusion 82.

Please refer to FIGs. 9 and 13 in combination. FIG. 13 is a schematic structural diagram of the terminal post 70 of the top cover assembly 100 shown in FIG. 3.

In this embodiment, the terminal post 70 is installed in the lower plastic member 80, the top cover 30, the upper plastic member 20 and the pressing ring 10. The opposite ends of the terminal post 70 respectively protrude relative to the pressing ring 10 and the lower plastic member 80. Specifically, the terminal post 70 may include a terminal post main body 71 and the terminal post base 72 described above. The terminal post base 72 is located on the side of the top cover 30 facing away from the pressing ring 10. One end of the terminal post main body 71 is fixedly connected to the terminal post base 72. The terminal post main body 71 passes through the second through hole 32 of the top cover 30, the third through hole 23 of the upper plastic member 20 and the first through hole 11 of the pressing ring 10, and the other end of the terminal post main body 71 extends out of the pressing ring 10.

The terminal post main body 71 may include a first sub-portion 711, a second sub-portion 712 and a third sub-portion 713. The first sub-portion 711, the second sub-portion 712 and the third sub-portion 713 are sequentially connected and coaxially arranged. The third sub-portion 713 is connected to the terminal post base 72, and the second sub-portion 712 is connected between the third sub-portion 713 and the first sub-portion 711. The first sub-portion 711, the second sub-portion 712, the third sub-portion 713 and the terminal post base 72 may be formed as an integrated structure by means such as integral molding.

The diameters of the first sub-portion 711, the second sub-portion 712 and the third sub-portion 713 of the terminal post 70 are different. The diameter of the first sub-portion 711 is less than the diameter of the second sub-portion 712, the diameter of the second sub-portion 712 is less than the diameter of the third sub-portion 713, and the diameter of the third sub-portion 713 is less than the diameter of the terminal post base 72.

It can be understood that by configuring the terminal post main body 71 as three portions with different diameters, the pressing ring 10, the upper plastic member 20, the top cover 30, the lower plastic member 80 and the sealing ring 90 can be better installed at corresponding portions, avoiding installation misalignment. Moreover, since the diameter of the terminal post base 72 is greater than the diameter of the terminal post main body 71, it can support the top cover assembly 100 connected to the terminal post main body 71 and prevent it from slipping off.

In this embodiment, the first sub-portion 711 of the terminal post 70 protrudes relative to the surface of the pressing ring 10 facing away from the upper plastic member 20. The second sub-portion 712 of the terminal post 70 is located within the first through hole 11 of the pressing ring 10. The third sub-portion 713 of the terminal post 70 is located within the third through hole 23 of the upper plastic member 20, the second through hole 32 of the top cover 30 and the fourth through hole 811 of the lower plastic member 80. A portion of the terminal post base 72 of the terminal post 70 is located within the fifth through hole 821 of the lower plastic member 80, and a portion of the terminal post base 72 protrudes relative to the second protrusion 82 of the lower plastic member 80.

Please refer to FIG. 9. The sealing ring 90 is sleeved on the terminal post main body 71. The sealing ring 90 is connected between the top cover 30 and the terminal post base 72. The sealing ring 90 is also connected between the first protrusion 22 of the upper plastic member 20 and the terminal post base 72. It should be noted that, in FIG. 9, the overlapping region between the sealing ring 90 and the top cover 30 is the region where interference is generated between the sealing ring 90 and the top cover 30 after the sealing ring 90 is compressed. The overlapping region between the sealing ring 90 and the first protrusion 22 of the upper plastic member 20 is the region where interference is generated between the sealing ring 90 and the first protrusion 22 of the upper plastic member 20 after the sealing ring 90 is compressed.

It can be understood that by providing the sealing ring 90, the airtightness between the terminal post 70, the upper plastic member 20 and the top cover 30 can be enhanced, and electrolyte leakage from the battery cell 220 to the exterior of the battery 200 can be prevented, which is conducive to improving the overall safety performance of the battery 200.

Specifically, the sealing ring 90 may be sleeved on the third sub-portion 713 of the terminal post 70, and be located within the fourth through hole 811 of the lower plastic member 80. The inner peripheral surface of the sealing ring 90 abuts against the outer peripheral surface of the third sub-portion 713. The outer peripheral surface of the sealing ring 90 is spaced apart from the inner surface of the fourth through hole 811. The sealing ring 90 has elasticity. One side of the sealing ring 90 may abut against and compress the first protrusion 22 of the upper plastic member 20 and the top cover 30, and the other side of the sealing ring 90 may abut against and compress the terminal post base 72, thereby achieving axial sealing between the top cover 30 and the terminal post 70. The number of sealing ring 90 may be equal to the number of terminal post 70, and thus may be one or more. When the number of sealing ring 90 is multiple, each sealing ring 90 is sleeved on one terminal post 70. Illustratively, the number of sealing rings 90 may be two, and the two sealing rings 90 are respectively sleeved on the two terminal posts 70.

In this embodiment, the assembly process of the top cover assembly 100 may at least include the following steps:

First, the terminal post main body 71 of the terminal post 70 sleeved with the sealing ring 90 is sequentially passed through the lower plastic member 80 and the top cover 30, such that the terminal post base 72 abuts against the lower plastic member 80, and the sealing ring 90 abuts between the top cover 30 and the terminal post base 72 of the terminal post 70.

Second, the limiting body 40 is inserted into the positioning hole 212 of the upper plastic member 20, and the limiting body 40 is interference-fitted with the positioning hole 212 of the upper plastic member 20.

Then, the upper plastic member 20 is sleeved on the terminal post 70 and abuts against the top cover 30 and the sealing ring 90.

Finally, the pressing ring 10 is placed and pressed, and after the sealing ring 90 is deformed, the pressing ring 10 is welded to the terminal post 70.

### Second Embodiment:

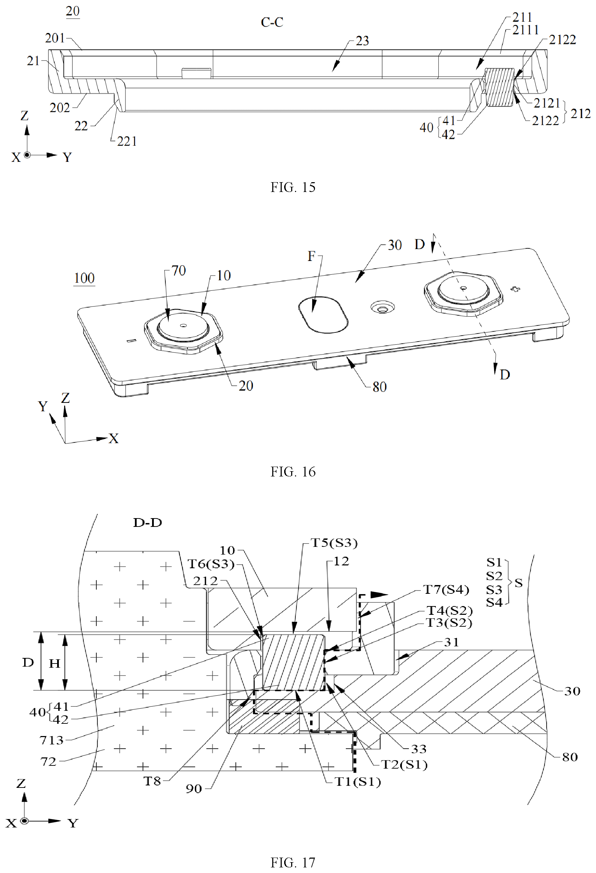

Please refer to FIGs. 14 and 15. FIG. 14 is a schematic diagram of the limiting body 40 and the upper plastic member 20 of the top cover assembly according to the second embodiment of the present disclosure after being assembled together. FIG. 15 is a sectional schematic diagram obtained by cutting along the cutting line C-C shown in Fig. 14..

In this embodiment, the contents identical to those in the first embodiment will not be described again. The difference from the first embodiment is that the structure of the limiting body 40 is different. In addition, the description of the top cover assembly 100 below may be applied to the first embodiment above in the absence of conflict.

The maximum dimension of the limiting body 40 in the length direction of the top cover assembly 100 gradually decreases in the direction from the pressing ring 10 toward the upper plastic member 20. That is, the maximum dimension of the limiting body 40 in the length direction of the top cover assembly 100 gradually decreases in the direction from the first end 41 toward the second end 42. Illustratively, the shape of the limiting body 40 is frustoconical.

It should be noted that the change in the maximum dimension of the limiting body 40 in the length direction of the top cover assembly 100 described above also applies to the change in the maximum dimension of the limiting body 40 in the width direction of the top cover assembly 100.

It can be understood that during the process of installing the limiting body 40 into the upper plastic member 20, the smaller second end 42 of the limiting body 40 can be quickly aligned with the positioning hole 212 and inserted into the positioning hole 212 of the upper plastic member 20. As the installation process of the limiting body 40 proceeds, the portion of the limiting body 40 contacting the positioning hole 212 becomes increasingly larger. The limiting body 40 abuts against and compresses the first hole 2121 of the positioning hole 212, thereby forming an interference fit fixation. After the limiting body 40 is assembled in place, the upper plastic member 20 and the limiting body 40 respectively abut against the top cover 30. That is, the second end 42 of the limiting body 40 abuts against the bottom wall of the second groove 33 of the top cover 30. The surface of the upper plastic body 21 close to the top cover 30 abuts against the bottom wall of the second installation groove 31 of the top cover 30. The first protrusion 22 of the upper plastic member 20 is located within the second through hole 32 of the top cover 30. This greatly facilitates the alignment of the upper plastic member 20 with the top cover 30 during assembly of the top cover assembly 100, reduces the assembly precision requirements of the top cover assembly 100, and improves the production efficiency of the top cover assembly 100.

### Third Embodiment:

Please refer to FIGS. 16 and 17. Fig. 16 is a structural schematic diagram of the top cover assembly provided in the third embodiment of the present disclosure. Fig. 17 is a cross-sectional schematic diagram of part of the structure of the top cover assembly obtained by cutting along the cutting line D-D shown in Fig. 16.

In this embodiment, the contents identical to those in the first embodiment will not be repeated herein. Different from the first embodiment, the top cover assembly 100 may further include a gas detection channel S. In addition, the description of the top cover assembly 100 below may be applied to the first and second embodiments described above where there is no conflict.

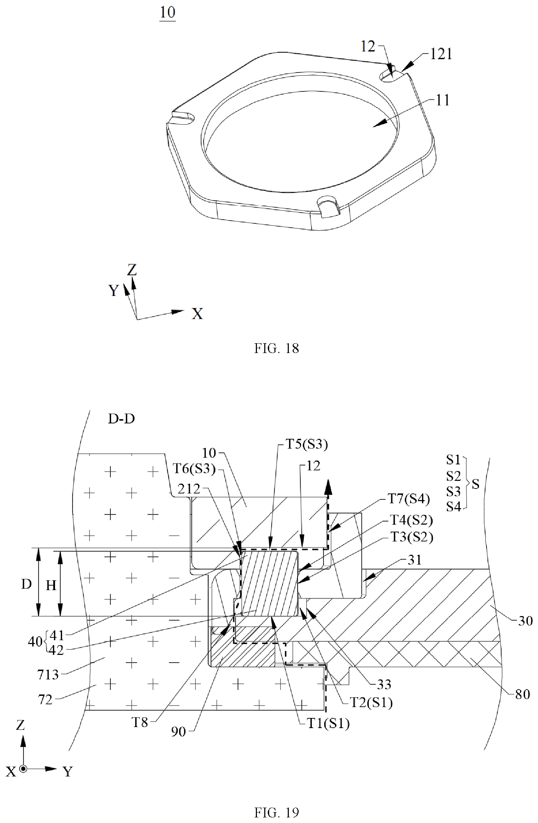

Please refer to FIGS. 17 and 18. FIG. 18 is a schematic structural diagram of the pressing ring 10 of the top cover assembly 100 shown in FIG. 16.

In this embodiment, the pressing ring 10 may be provided with a first notch 121. The first notch 121 faces away from the first through hole 11. Specifically, the first notch 121 penetrates through the outer side wall of the pressing ring 10 in the radial direction. The first notch 121 connects the first groove 12 with the exterior of the pressing ring 10. That is, the first groove 12 may be an open groove open on one side. The first notch 121 is the open end of the first groove 12. For example, the first groove 12 may be an arched groove open on one side. The open end of the first groove 12 faces away from the first through hole 11. That is, the first notch 121 faces away from the first through hole 11.

In some other embodiments, the first notch 121 may also face toward the first through hole 11.

In this embodiment, the first notch 121 may be located opposite to the second notch 331 of the top cover 30 in the radial direction of the limiting body 40. That is, the open direction of the first groove 12 is opposite to the open direction of the second groove 33. It can be understood that by connecting the limiting body 40 with the first groove 12 and the second groove 33 having opposite open directions, sliding of the limiting body 40 relative to the pressing ring 10 and the top cover 30 can be effectively prevented, so that the limiting body 40 can have good connection stability and reliability.

Please refer to FIG. 17. The shortest distance D between the bottom wall of the first groove 12 and the bottom wall of the second groove 33 may be greater than the height H of the limiting body 40. Specifically, there is a gap between the bottom wall of the first groove 12 and the first end 41 of the limiting body 40, and/or there is a gap between the bottom wall of the second groove 33 and the second end 42 of the limiting body 40. This gap can increase assembly tolerance space, so that even if deviation occurs during the assembly process of the battery 200, the limiting body 40 can still normally support between the pressing ring 10 and the top cover 30, preventing excessive sinking of the pressing ring 10 from causing leakage of the cell 220. It can also ensure that the limiting body 40 is not subjected to force in the height direction of the battery 200 (the Z direction shown in the corrsponding drawing(s)), that is, ensure that the limiting body 40 is not subjected to force in the thickness direction of the top cover assembly 100, avoiding damage to the limiting body 40 during the pressing and welding processes of the pressing ring 10, improving product yield and reducing production costs.

Furthermore, during the operation of the battery 200, the terminal post 70 generates heat, causing thermal expansion of surrounding materials (such as the upper plastic member 20). Consequently, the sealing ring 90 rebounds upon heating to expand the terminal post 70 downward, resulting in insufficient compression of the sealing ring 90 and failure of the sealing surface at the position of the terminal post 70, causing leakage. In this embodiment, there is a gap between the limiting body 40 and the bottom wall of the first groove 12 of the pressing ring 10, and/or there is a gap between the limiting body 40 and the bottom wall of the second groove 33 of the top cover 30. When the upper plastic member 20 softens or melts due to heat, this gap can provide certain space to reduce the influence of the expansion of the upper plastic member 20 on the compressed state of the sealing ring 90. Thereby avoiding the problem of insufficient compression of the sealing ring 90 causing failure of the sealing surface and leakage, and improving the operational reliability of the battery 200.

Therein, the dimension of the first groove 12 is larger than the dimension of the first end 41 of the limiting body 40, so that the first end 41 of the limiting body 40 is completely located in the first groove 12 to ensure assembly stability between the limiting body 40 and the pressing ring 10 and the top cover 30. The dimension of the second groove 33 is larger than the dimension of the second end 42 of the limiting body 40, so that the second end 42 of the limiting body 40 is completely located in the second groove 33 to ensure assembly stability between the limiting body 40 and the pressing ring 10 and the top cover 30.

In this embodiment, the top cover assembly 100 may include a gas detection channel S. The gas detection channel S may include a first gas passage S1, a second gas passage S2, a third gas passage S3, and a fourth gas passage S4. The first gas passage S1, the second gas passage S2, the third gas passage S3, and the fourth gas passage S4 are sequentially connected and form at least part of the gas detection channel S of the top cover assembly 100.

Specifically, a gap region between the outer surface of the limiting body 40 near the second end 42 and the inner wall of the second groove 33 of the top cover 30 forms the first gas passage S1. The outer surface of the limiting body 40 near the second end 42 includes the outer peripheral surface of the limiting body 40 near the second end 42 and the bottom surface of the limiting body 40. The inner wall of the second groove 33 includes the inner peripheral surface of the second groove 33 and the bottom wall of the second groove 33. The first gas passage S1 may include a gap T1 and a gap T2. The gap T1 and the gap T2 are communicated with each other. The gap between the second end 42 of the limiting body 40 and the bottom wall of the second groove 33 is the gap T1. Furthermore, in order to make the second end 42 of the limiting body 40 completely located in the second groove 33, the dimension of the second groove 33 is larger than the dimension of the second end 42 of the limiting body 40. Therefore, there is a gap between the outer peripheral surface of the limiting body 40 and the inner peripheral surface of the second groove 33, and this gap is the gap T2.

A gap region between the outer surface of the middle section of the limiting body 40 and the inner surface of the positioning hole 212 forms the second gas passage S2. The outer surface of the middle section of the limiting body 40 refers to the outer peripheral surface of the limiting body 40. The second gas passage S2 may include a gap T3 and a gap T4. The gap T3 and the gap T4 are communicated with each other. Specifically, the gap between the outer peripheral surface of the limiting body 40 and the second side surface 2121b of the first hole 2121 in the positioning hole 212 is the gap T3. The gap between the outer peripheral surface of the limiting body 40 and the inner peripheral surface of the second hole 2122 in the positioning hole 212 is the gap T4.

A gap region between the outer surface of the limiting body 40 near the first end 41 and the inner wall of the first groove 12 of the pressing ring 10 forms the third gas passage S3. The outer surface of the limiting body 40 near the first end 41 includes the outer peripheral surface of the limiting body 40 near the first end 41 and the bottom surface of the limiting body 40. The inner wall of the first groove 12 includes the inner peripheral surface of the first groove 12 and the bottom wall of the first groove 12. The third gas passage S3 may include a gap T5 and a gap T6. The gap T5 and the gap T6 are communicated with each other. The gap between the first end 41 of the limiting body 40 and the bottom wall of the first groove 12 is the gap T5. Furthermore, in order to make the first end 41 of the limiting body 40 completely located in the first groove 12, the dimension of the first groove 12 is larger than the dimension of the first end 41 of the limiting body 40. Therefore, there is a gap between the outer peripheral surface of the limiting body 40 and the inner peripheral surface of the first groove 12, and this gap is the gap T6.

A gap region between the outer surface of the pressing ring 10 and the inner wall of the first installation groove 211 of the upper plastic member 20 forms the fourth gas passage S4. The outer surface of the pressing ring 10 refers to the outer peripheral surface of the pressing ring 10. The inner wall of the first installation groove 211 refers to the inner peripheral surface of the first installation groove 211. The fourth gas passage may include a gap T7. Specifically, the sectional width of the pressing ring 10 along the thickness direction of the top cover assembly 100 is smaller than the sectional width of the first installation groove 211 along the thickness direction of the top cover assembly 100. Therefore, there is a gap between the outer peripheral surface of the pressing ring 10 and the inner peripheral surface of the first installation groove 211, and this gap is the gap T7.

The gas detection channel S may further include a gap T8. The gap T8 is the gap between the inner surface of the second through hole 32 of the top cover 30 and the first protrusion 22 of the upper plastic member 20.

It should be noted that in this embodiment, the provision of the gas detection channel S in the top cover assembly 100 requires that both the first groove 12 of the pressing ring 10 and the second groove 33 of the top cover 30 be open grooves. Therein, the open end of the first groove 12 faces away from the terminal post 70. The open end of the second groove 33 faces toward the terminal post 70.

It can be understood that the sealing ring 90 can improve the sealing effect of the battery. However, during use of the battery, the terminal post 70 may generate heat due to prolonged use or other conditions. Since the sealing ring 90 is elastic, after receiving heat from the terminal post 70, the sealing ring 90 will rebound and expand the terminal post 70 in a direction away from the top cover assembly 90. This causes insufficient compression of the sealing ring 90, leading to failure of the sealing surface at the position of the terminal post 70 and causing leakage.

Therefore, in this embodiment, when the sealing surface lose efficacy or fails, gas inside the battery, such as helium, argon, etc., enters from the gap between the inner peripheral surface of the fifth through hole 821 of the lower plastic member 80 and the outer peripheral surface of the terminal post base 72, passes through the gap between the surface of the lower plastic member 80 facing away from the top cover 30 and the surface of the terminal post base 72 near the third sub-portion 713, enters the gap between the sealing ring 90 and the fourth through hole 811 of the lower plastic member 80, and then diffuses to the failed sealing surface of the sealing ring 90, and thereafter enters the gas detection channel S of the top cover assembly 100. At this time, the gas may have the following diffusion paths.

For example, as shown by the arrow path in FIG. 17, the gas diffuses from the gap T8 between the second through hole 32 of the top cover 30 and the first protrusion 22 of the upper plastic member 20 to the open end of the second groove 33 of the top cover 30, then diffuses through the gap T1 between the limiting body 40 and the bottom wall of the second groove 33 to the gap T2 between the limiting body 40 and the inner peripheral surface of the second groove 33. Then it diffuses upward around the limiting body 40, passes through the gap T3 and the gap T4 between the positioning hole 212 of the upper plastic member 20 and the limiting body 40, continues to diffuse upward to the open end of the first groove 12 of the pressing ring 10. Then it diffuses from the open end of the first groove 12 to the gap T7 between the outer peripheral surface of the pressing ring 10 and the inner peripheral surface of the first installation groove 211. Finally, it overflows to the outside of the battery 200 and is detected by a detection equipment.

For example, as shown by the arrow path in FIG. 19, FIG. 19 is a schematic diagram of one diffusion path of gas inside the top cover assembly 100. The gas diffuses from the gap T8 between the second through hole 32 of the top cover 30 and the first protrusion 22 of the upper plastic member 20 to the open end of the second groove 33 of the top cover 30. Then it diffuses upward around the limiting body 40, passes through the gap T3 and the gap T4 between the positioning hole 212 of the upper plastic member 20 and the limiting body 40, continues to diffuse upward to the gap T6 between the inner peripheral surface of the first groove 12 of the pressing ring 10 and the limiting body 40. Then it passes through the gap T5 between the limiting body 40 and the bottom wall of the first groove 12, diffuses to the open end of the first groove 12 of the pressing ring 10. Then it diffuses from the open end of the first groove 12 to the gap T7 between the outer peripheral surface of the pressing ring 10 and the inner peripheral surface of the first installation groove 211. Finally, it overflows to the outside of the battery 200 and is detected by the detection equipment.

In the embodiments of the present disclosure, by providing the gas detection channel S in the top cover assembly 100, gas leakage can be detected in time. This avoids the formation of false sealing at the contact surface between the upper plastic member 20 and the top cover 30, which would prevent true detection of the sealing performance of the sealing surface, thereby improving the safety and service life of the battery, and also improving the product yield of the battery.

Furthermore, in the embodiments of the present disclosure, neither the surface of the pressing ring 10 near the upper plastic member 20 nor the surface of the top cover 30 near the upper plastic member 20 is provided with grooves or through holes extending radially through, so that when the pressing ring 10 is placed on the terminal post 70, it can apply a relatively consistent pressing force to the sealing ring 90, and make the pressing surfaces between the pressing ring 10 and the top cover 30 and the terminal post 70 flatter and the pressing force more uniform, thereby further improving the sealing performance of the annular sealing surface.

The above is a detailed introduction to the embodiments of the present disclosure. The description of the above embodiments is only used to help understand the method and core idea of the present disclosure. Meanwhile, for those skilled in the art, based on the ideas of present disclosure, there will be changes in the specific implementation methods and application scope. In conclusion, the content of this specification should not be construed as a restriction on present disclosure.

## Claims

1. A top cover assembly (100), comprising: a terminal post (70), a top cover (30), an upper plastic member (20), a pressing ring (10) and a limiting body (40);
wherein the terminal post (70) is connected to the top cover (30);
the upper plastic member (20) is sleeved on the terminal post (70), along a radial direction of the terminal post (70), the upper plastic member (20) is located between the top cover (30) and the terminal post (70); wherein the upper plastic member (20) comprises an upper plastic body (21) and a positioning hole (212), the positioning hole (212) is provided on the upper plastic body (21) and pass through the upper plastic body (21) along a thickness direction of the upper plastic member (20);
the pressing ring (10) is sleeved on the terminal post (70) and is in contact with a side of the upper plastic body (21) that faces away from the top cover (30),; and
the limiting body (40) is inserted through the positioning hole (212) and is located between the pressing ring (10) and the top cover (30) in a thickness direction of the top cover (30); wherein in a circumferential direction of the limiting body (40), a portion of an outer surface of the limiting body (30) is interference-fitted to a portion of an inner surface of the positioning hole (212).

2. The top cover assembly (100) according to claim 1, wherein the positioning hole (212) has a first side surface (2121a) and a second side surface (2121b), along the circumferential direction of the positioning hole (212), two ends of the first side surface (2121a) are respectively connected to two ends of the second side surface (2121b), and the first side surface (2121a) extends in a curved manner between the two ends of the second side surface (2121b), the outer surface of the limiting body (40) is interference-fitted to a portion of the first side surface (2121a) and a portion of the second side surface (2121b); or
the positioning hole (212) has at least three first side surfaces (2121a), wherein along a circumferential direction of the positioning hole (212), each of the first side surfaces (2121a) is connected end to end with two adjacent first side surfaces (2121a) to form the positioning hole (212), wherein along the circumferential direction of the positioning hole (212), a portion of the outer surface of the limiting body (40) is interference-fitted with the at least three first side surfaces (2121a); or
the positioning hole (212) has two first side surfaces (2121a) and two second side surfaces (2121b), wherein along a circumferential direction of the positioning hole (212), each first side surface (2121a) is connected between two adjacent second side surfaces (2121b), and the outer surface of the limiting body (40) is interference-fitted with the two first side surfaces (2121a) and/or the two second side surfaces (2121b); or
the positioning hole (212) has at least three first side surfaces (2121a) and at least three second side surfaces (2121b), wherein along a circumferential direction of the positioning hole (212), each first side surface (2121a) is connected between two adjacent second side surfaces (2121b), and the outer surface of the limiting body (40) is interference-fitted with the at least three first side surfaces (2121a) and/or the at least three second side surfaces (2121b); wherein a maximum distance (L1) between the first side surface (2121a) and a central axis of the limiting body (40) is different from a maximum distance (L1) between the second side surface (2121b) and the central axis of the limiting body (40).

3. The top cover assembly (100) according to claim 1, wherein the positioning hole (212) is elliptical or irregularly circular.

4. The top cover assembly (100) according to any of claims 2-3, wherein the upper plastic body (21) is provided with a first installation groove (211), an opening of the first installation groove (211) is located on a surface of the upper plastic member (21 facing away from the top cover (30), the positioning hole (212) passes through a bottom wall of the first installation groove (211) and a surface of the upper plastic body (21) facing the top cover (30), and a part of the pressing ring (10) is located in the first installation groove (211).

5. The top cover assembly (100) according to claim 4, wherein the positioning hole (212) comprises a first hole (2121) and a second hole (2122) sequentially arranged along the thickness direction of the upper plastic member (20), the first hole (2121) has the first side surface (2121a) and the second side surface (2121b), and the second hole (2122) and the first hole (2121) are coaxially arranged and are communicated with each other;
wherein an opening of the second hole (2122) away from the first hole (2121) is located on the bottom wall of the first installation groove (211), and a maximum dimension of the second hole (2122) in a length direction of the upper plastic member (20) gradually decreases from the upper plastic member (20) towards the top cover (30); and/or
the opening of the second hole (2122) away from the first hole (2121) is located on the surface of the upper plastic member (20) facing the top cover (30), the maximum dimension of the second hole (2122) in the length direction of the upper plastic member (20) gradually increases from the upper plastic member (20) towards the top cover (30).

6. The top cover assembly (100) according to any of claims 1-3, wherein a maximum dimension of the limiting body (40) in a length direction of the top cover assembly (100) gradually decreases along a direction from the pressing ring (10) to the upper plastic member (20).

7. The top cover assembly (100) according to any of claims 1-3, wherein a melting point of the limiting body (40) is greater than a melting point of the upper plastic member (20).

8. The top cover assembly (100) according to any of claims 1-3, wherein the pressing ring (10) is provided with a first groove (12), and an opening of the first groove (12) is located on the surface of the pressing ring (10) facing the upper plastic member (20);
wherein the top cover (30) is provided with a second groove (33), and an opening of the second groove (33) is located on a surface of the top cover (33) facing the upper plastic member (20);
wherein one end of the limiting body (40) is located in the first groove (12), and the other end of the limiting body (40) is located in the second groove (33);
wherein a shortest distance between a bottom wall of the first groove (12) and a bottom wall of the second groove (33) is greater than a height of the limiting body (40).

9. The top cover assembly (100) according to claim 8, wherein the pressing ring (10) is provided with a first through hole (11), the first through hole (11) passes through the pressing ring (10) along a thickness direction of the pressing ring (10), a part of the terminal post (70) is located in the first through hole (11), the pressing ring (10) is further provided with a first notch (121), the first notch (121) passes through the outer side wall of the pressing ring (10) in the radial direction and communicates with the first groove (12) and the outside of the pressing ring (10);
wherein the top cover (30) is provided with a second through hole (32), the second through hole (32) passes through the top cover (30) along the thickness direction of the top cover (30), a part of the terminal post (70) is located inside the second through hole (32); the top cover (30) is provided with a second notch (331), the second notch (331) passes through an inner wall of the second through hole (32) and communicates with the second groove (33) and the second through hole (32).

10. The top cover assembly (100) according to claim 8, wherein a gap region between the outer surface of the limiting body (40) and the inner wall of the second groove (33) forms a first gas passage (S1), a gap region between the outer surface of the limiting body (40) and an inner surface of the positioning hole (212) forms a second gas passage (S2), and a gap region between the outer surface of the limiting body (40) and an inner wall of the first groove (12) forms a third gas passage (S3), a gap region between the outer surface of the pressing ring (10) and the inner wall of the first installation groove (211) forms a fourth gas passage (S4), wherein the first gas passage (S1), the second gas passage (S2), the third gas passage (S3) and the fourth gas passage (S4) are successively connected and form at least part of an air detection channel of the top cover assembly (100).

11. The top cover assembly (100) according to claim 9, wherein the top cover (30) is further provided with a second installation groove (31), an opening of the second installation groove (31) is located on the surface of the top cover (30) facing the upper plastic member (20), the second installation groove (31) is coaxially arranged with the second through hole (32) and communicated with the second through hole (32), a part of the upper plastic body (21) is located in the second installation groove (31), and the opening of the second groove (33) is located on the bottom wall of the second installation groove (33);
wherein the upper plastic member (20) further comprises a first protrusion (22), the first protrusion (22) is fixedly connected to the surface of the upper plastic body (21) facing away from the pressing ring (10), and the first protrusion (22) is located in the second through hole (32);
wherein the upper plastic member (20) is provided with a third through hole (23), the third through hole (23) passes through the upper plastic body (21) and the first protrusion (22) along the thickness direction of the upper plastic member (20), the third through hole (23) is coaxially arranged and communicated with the first installation groove (211), and is connected between the first through hole (11) and the second through hole (32), and is in communication with the first through hole (11) and the second through hole (32);
wherein the terminal post (70) comprises a terminal post base (72) and a terminal post main body (71), the terminal post base (72) is located on a side of the top cover (30) that faces away from the pressing ring (10), one end of the terminal post main body (71) is fixedly connected to the terminal post base (72), the terminal post main body (71) passes through the first through hole (11), the second through hole (32) and the third through hole (23), the other end of the terminal post main body (71) extends out of the pressing ring (10).

12. The top cover assembly (100) according to claim 11, wherein the top cover assembly (100) further comprises a sealing ring (90), the sealing ring (90) is arranged on the terminal post main body (71), the sealing ring (90) is connected between the top cover (30) and the terminal post base (72), and the sealing ring (90) is further connected between the first protrusion (22) and the terminal post base (72).

13. The top cover assembly (100) according to claim 11, wherein the top cover assembly (100) further comprises a lower plastic member (80), the lower plastic member (80) is connected to the surface of the top cover (30) facing away from the pressing ring (10), and a part of the lower plastic member (80) is located between the top cover (30) and the terminal post base (72).

14. A battery (200) comprising:
a housing (210);
a battery cell (220); and
the top cover assembly (100) as claimed in any of claims 1-13;
wherein the top cover assembly (100) is connected to the housing (210), and the top cover assembly (100) and the housing (210) enclose to form an accommodation space of the battery (200), and the battery cell (220) is located within the accommodation space.

15. An electricity-consumption device (300), comprising the battery (200) as claimed in claim 14.
